(19) Europäisches Patentamt
European Patent Office
Office européen des brevets

(11) **EP 4 726 480 A1**

(12) **EUROPEAN PATENT APPLICATION**
published in accordance with Art. 153(4) EPC

(43) Date of publication:
**15.04.2026 Bulletin 2026/16**

(21) Application number: **24838617.9**

(22) Date of filing: **28.06.2024**

(51) International Patent Classification (IPC):
**G05B 13/04** (2006.01)

(86) International application number:
**PCT/CN2024/102465**

(87) International publication number:
**WO 2025/011362 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.07.2023 CN 202310863147**

(71) Applicant: **Huawei Technologies Co., Ltd.
Shenzhen, Guangdong 518129 (CN)**

(72) Inventors:
• **MING, Fang**
**Shenzhen, Guangdong 518129 (CN)**
• **CUI, Yunduan**
**Shenzhen, Guangdong 518055 (CN)**
• **ZHONG, Gang**
**Shenzhen, Guangdong 518129 (CN)**

(74) Representative: **Grünecker Patent- und Rechtsanwälte PartG mbB Leopoldstraße 4 80802 München (DE)**

(54) **DEVICE CONTROL METHOD AND APPARATUS**

(57) A device control method and a device control apparatus are provided. The control method includes: receiving a first set from a cloud, where the first set includes at least one of the following: a plurality of pieces of training data, a training parameter of a first reinforcement learning model, or a parameter of the first reinforcement learning model (S410); updating, based on the first set, a second reinforcement learning model deployed in a first device to the first reinforcement learning model, where the first reinforcement learning model is used to adjust energy consumption of the first device (S420); obtaining a first state of the first device (S430); and processing the first state of the first device by using the first reinforcement learning model, to obtain a first control action used to adjust an operating parameter of the first device (S440). The device control method helps implement energy consumption optimization of a device.

400

FIG. 4

EP 4 726 480 A1

# EP 4 726 480 A1

**Description**

This application claims priority to Chinese Patent Application No. 202310863147.2, filed with the China National Intellectual Property Administration on July 12, 2023 and entitled "DEVICE CONTROL METHOD AND DEVICE CONTROL APPARATUS", which is incorporated herein by reference in its entirety.

## TECHNICAL FIELD

Embodiments of this application relate to the field of control technologies, and more specifically, to a device control method and a device control apparatus.

## BACKGROUND

With continuous development of economic technologies, global energy consumption sharply increases. Reducing energy consumption of electrical devices has become an important research direction. Air conditioners are used as an example. The air conditioners are typical nonlinear, coupled, and time-varying multi-variable systems, and the air conditioners are located in various environments. Currently, it is difficult to achieve ideal operating effect by regulating the air conditioners.

Conventional control methods such as proportional-integral-derivative (proportion integration differentiation, PID) in related solutions are used to regulate the air conditioners. These types of conventional control methods are mainly based on human-designed rules, and have been widely used currently because of low application costs. However, functions of the methods are simple, and ideal control effect cannot be achieved for this type of complex system, namely, the air conditioner. Alternatively, a model predictive control method based on thermodynamic modeling is used in the related solutions. Control effect of this type of method highly depends on quality of an air conditioning system model, and consequently engineering implementation costs are high. At the same time, a difference between a mathematical model and an actual working environment may be large, and a generalization capability of a control result is poor.

Therefore, how to implement energy consumption optimization of a device becomes an urgent problem to be resolved.

## SUMMARY

Embodiments of this application provide a device control method and a device control apparatus. This helps implement energy consumption optimization of a device.

According to a first aspect, a device control method is provided. The method includes: receiving a first set from a cloud, where the first set includes at least one of the following: a plurality of pieces of training data, a training parameter of a first reinforcement learning model, or a parameter of the first reinforcement learning model; updating, based on the first set, a second reinforcement learning model deployed in a first device to the first reinforcement learning model, where the first reinforcement learning model is used to adjust energy consumption of the first device; obtaining a first state of the first device; and processing the first state by using the first reinforcement learning model, to obtain a first control action, where the first control action is used to adjust an operating parameter of the first device.

In the solution in this embodiment of this application, a reinforcement learning model used by a local device is determined by using the set of the cloud. Data of the cloud is global data. In the solution in this embodiment of this application, a data utilization dimension may be extended from a local dimension to a global dimension, thereby effectively improving global data utilization efficiency. This helps improve a generalization capability of the model, to adapt to different environments, and helps ensure effect of energy consumption optimization in various working environments. In addition, in the solution in this embodiment of this application, the reinforcement learning model is used to implement device control, thereby reducing dependence of the control method on human prior knowledge, and reducing costs.

With reference to the first aspect, in some implementations of the first aspect, updating, based on the first set, the second reinforcement learning model deployed in the first device to the first reinforcement learning model may include: updating a weight parameter of the second reinforcement learning model based on $N_{batch}$ pieces of training data, to obtain the first reinforcement learning model, where $N_{batch}$ is a positive integer, and the $N_{batch}$ pieces of training data includes a part of or all the plurality of pieces of training data.

In the solution in this embodiment of this application, in a working process of the device, the reinforcement learning model may perform autonomous learning, and update the weight parameter of the model, to continuously improve a control capability adaptively, thereby improving effect of energy consumption optimization of the device, that is, improving control performance of the model.

In addition, in the solution in this embodiment of this application, a local agent model may be trained by using interaction data of another device of the cloud. This helps make full use of the training data of the cloud, break through an efficiency bottleneck of only a single reinforcement learning model in terms of sampling, implement collaborative learning of local and remote data, improve a generalization capability of the reinforcement learning model, and improve effect of energy consumption optimization.

In addition, in the solution in this embodiment of this application, the local agent model may be trained jointly by using data from the another device of the cloud and local data, so that a feature of a heterogeneous working environment is integrated and a characteristic of a local environment is considered. This helps improve a generalization capability of the agent model while adapting to a local working environment, and further improves effect of energy consumption optimization.

With reference to the first aspect, in some implementations of the first aspect, the method further includes: obtaining a second state, of the first device, obtained after the first control action is performed; and calculating, based on the second state and a first reward function in the first reinforcement learning model, a first reward signal corresponding to the first control action.

With reference to the first aspect, in some implementations of the first aspect, the method further includes: sending a second set to the cloud, where the second set includes at least one of the following: first interaction data, the training parameter of the first reinforcement learning model, or the parameter of the first reinforcement learning model, and the first interaction data includes: the first state, the first control action, the first reward signal corresponding to the first control action, and the second state obtained after the first control action is performed.

In this way, a database in the cloud can be enriched, and data can be better shared between the cloud and the local.

With reference to the first aspect, in some implementations of the first aspect, first training data in the plurality of pieces of training data includes: a first sample state, a first sample control action in the first sample state, a first sample reward signal corresponding to the first sample control action, and a second sample state obtained after the first sample control action is performed.

With reference to the first aspect, in some implementations of the first aspect, before receiving the first set from the cloud, the method further includes: sending environment information of the first device to the cloud, where the environment information of the first device is used to determine the first set.

In the solution in this embodiment of this application, an element used in the first set is determined based on a similarity between an environment in which a source device corresponding to the element in the first set is located and an environment in which the first device is located. This helps make a working environment of the source device corresponding to the element in the set similar to or the same as a working environment of the first device as much as possible, so that the first reinforcement learning model can adapt to a local working environment, thereby improving effect of energy consumption optimization.

With reference to the first aspect, in some implementations of the first aspect, the plurality of pieces of training data are determined based on similarities between environment features of source devices corresponding to the plurality of pieces of training data and an environment feature of the first device, the environment features of the source devices corresponding to the plurality of pieces of training data are obtained by performing feature extraction on environment information of the source devices corresponding to the plurality of pieces of training data, and the environment feature of the first device is obtained by performing feature extraction on the environment information of the first device.

In the solution in this embodiment of this application, training data used for training an agent model on the first device is determined based on the similarity between the environment in which the source device is located and the environment in which the first device is located. This helps make working environments of the source devices corresponding to the plurality of pieces of training data similar to or the same as the working environment of the first device as much as possible, so that a control policy obtained through learning by the agent model adapts to the local working environment, thereby improving effect of energy consumption optimization of a terminal device. In addition, training data of the another device may be further used to improve a generalization capability of the control policy.

With reference to the first aspect, in some implementations of the first aspect, the plurality of pieces of training data are obtained by performing random sampling in a training data set based on a similarity between an environment feature of a source device corresponding to training data in the training data set of the cloud and the environment feature of the first device, and the environment feature of the source device corresponding to the training data in the training data set of the cloud is obtained by performing feature extraction on environment information of the source device corresponding to the training data in the training data set of the cloud.

With reference to the first aspect, in some implementations of the first aspect, the parameter of the first reinforcement learning model includes at least one of the following: a parameter of a first agent model in the first reinforcement learning model or a parameter of the first reward function in the first reinforcement learning model.

For example, the first set may include the parameter of the first agent model. In this case, updating the second reinforcement learning model to the first reinforcement learning model may include: updating a second agent model in the second reinforcement learning model to the first agent model in the first reinforcement learning model; and processing the first state by using the first agent model, to obtain the first control action.

The solution in this embodiment of this application can support a plurality of reinforcement learning models. This helps make full use of advantages of different models in different scenarios, and improves a generalization capability.

For example, the first set may include the parameter of the first reward function. In this case, updating the second reinforcement learning model to the first reinforcement learning model may include: updating a second reward function in the second reinforcement learning model to the first reward function.

The agent model deployed in the first device may or may not be updated. If the agent model deployed in the first device does not change, a control action, for example, the first control action, is still determined by using the agent model, and a reward signal corresponding to the first control action is calculated based on an updated reward function, namely, the first reward function.

In this embodiment of this application, in a working process of the local device, the reward function may be adjusted based on the data sent by the cloud. For example, the reward function is adjusted based on different task requirements or different working environment requirements. In this way, a manner of calculating the reward signal in the training data may be adjusted, so that a required reinforcement learning model, for example, a reinforcement learning model that adapts to a target task or a target working environment, can be obtained through training in a subsequent training process, thereby improving control performance.

With reference to the first aspect, in some implementations of the first aspect, determining the first reinforcement learning model based on the set includes: when the first device is in a first scenario, updating a weight parameter of the second agent model in the second reinforcement learning model in a first update mode based on the set, to obtain the first agent model in the first reinforcement learning model; or when the first device is in a second scenario, updating the weight parameter of the second agent model in the second reinforcement learning model in a second update mode based on the set, to obtain the first agent model in the first reinforcement learning model, where the first scenario is different from the second scenario, and a difference between the first update mode and the second update mode includes at least one of the following: a quantity of update times of the weight parameter of the second agent model or a start moment of the update.

In this way, the control model in this embodiment of this application has a strong generalization capability, thereby helping expand an application scope. Even if the working environment of the device changes, control effect can still be ensured, thereby helping ensure effect of energy consumption optimization.

With reference to the first aspect, in some implementations of the first aspect, the first device is an air conditioner, and the first state includes at least one of the following: an outdoor temperature, an indoor temperature, indoor humidity, energy consumption of the air conditioner, an airflow of a fan of the air conditioner, a setting temperature of a direct evaporative cooler of the air conditioner, a setting temperature of an indirect evaporative cooler of the air conditioner, or a setting temperature of a cooling coil of the air conditioner; or the first device is an air conditioner, and the first control action includes at least one of the following: a rotational speed setting command signal of a compressor of the air conditioner, a temperature setting command signal of a direct evaporative cooler of the air conditioner, a temperature setting command signal of an indirect evaporative cooler of the air conditioner, a temperature setting command signal of a cooling coil of the air conditioner, an indoor-fan airflow setting command signal of the air conditioner, or an outdoor-fan airflow setting signal of the air conditioner.

According to a second aspect, a device control apparatus is provided, and may include a one-to-one corresponding module/unit for performing the method/operation/step/action described in the first aspect. The module/unit may be a hardware circuit, or may be software, or may be implemented by using a combination of a hardware circuit and software. In a design, the control apparatus may include a processing unit and a transceiver unit.

The transceiver unit is configured to perform receiving and sending actions in the method described in the first aspect, and the processing module is configured to perform a processing related action in the method described in the first aspect.

It should be understood that extensions to, limitations on, explanations for, and descriptions of related content in the first aspect are also applicable to same content in the second aspect.

According to a third aspect, an embodiment of this application provides a computer-readable storage medium. The computer-readable storage medium stores program code. When the computer storage medium is run on a computer, the computer is enabled to perform any one of the first aspect or the possible implementations of the first aspect.

According to a fourth aspect, an embodiment of this application provides a computer program product. The computer program product includes computer program code. When the computer program code is run on a computer, the computer is enabled to perform any one of the first aspect or the possible implementations of the first aspect.

According to a fifth aspect, an embodiment of this application provides a computer device. The computer device includes a processor. The processor is configured to: be coupled to a memory, and read and execute instructions and/or program code in the memory, to perform any one of the first aspect or the possible implementations of the first aspect.

Optionally, the processor may be a general-purpose processor, and may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

## BRIEF DESCRIPTION OF DRAWINGS

FIG. 1 is a diagram of a system architecture according to an embodiment of this application;
FIG. 2 is a diagram of a device control system according to an embodiment of this application;
FIG. 3 is a diagram of another control system according to an embodiment of this application;
FIG. 4 is a diagram of a device control method according to an embodiment of this application;
FIG. 5 is a block diagram of a device control apparatus according to an embodiment of this application; and
FIG. 6 is a block diagram of another device control apparatus according to an embodiment of this application.

## DESCRIPTION OF EMBODIMENTS

The following describes technical solutions of embodiments in this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, "related (corresponding, related)" and "corresponding (corresponding)" may be sometimes used interchangeably. It should be noted that meanings expressed by the terms are consistent when a difference between the terms is not emphasized.

A service scenario described in embodiments of this application is intended to describe the technical solutions in embodiments of this application more clearly, and does not constitute a limitation on the technical solutions provided in embodiments of this application. A person of ordinary skill in the art can learn that the technical solutions provided in embodiments of this application are also applicable to a similar technical problem with evolution of a network architecture and emergence of a new service scenario.

Reference to "one embodiment", "some embodiments", or the like described in this specification means that a specific feature, structure, or characteristic described with reference to embodiment is included in one or more embodiments of this application. Therefore, statements "in one embodiment", "in some embodiments", "in some other embodiments", "in other embodiments", and the like that appear at different places in this specification do not necessarily mean referring to a same embodiment. Instead, the statements mean "one or more but not all of embodiments", unless otherwise specifically emphasized in another manner. The terms "include", "comprise", "have", and their variants all mean "include but are not limited to", unless otherwise specifically emphasized in another manner.

In this application, "at least one" means one or more, and "a plurality of" means two or more. The term "and/or" describes an association relationship for describing associated objects and indicates that three relationships may exist. For example, A and/or B may indicate the following cases: Only A exists, both A and B exist, and only B exists, where A and B may be singular or plural. The character "/" usually indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

The solutions in embodiments of this application can be applied to an energy consumption optimization scenario of an electrical device or an electrical system. In other words, the device in embodiments of this application may be an electrical device, an electrical system, or the like that has an energy consumption optimization requirement. For example, the device in embodiments of this application may be a temperature control device, an air quality purification device, a water quality purification device, a humidity adjustment device, or the like. For example, the device in embodiments of this application may be an air conditioner, a refrigerator, a humidifier, an air purifier, or the like. For ease of description, embodiments of this application are mainly described by using an air conditioner as an example, and this does not constitute a limitation on the solutions in embodiments of this application.

To better describe the solutions in embodiments of this application, the following first describes terms that may be used in this application.

(1) Reinforcement learning (reinforcement learning, RL)

The reinforcement learning is a special field in machine learning, and is a process of continuously learning an optimal policy, making sequence decisions, and obtaining maximum returns through interaction between an agent (agent) and an environment (environment).

The reinforcement learning is a process of searching for a better solution through "exploration". The agent needs to develop existing experience to gain benefits, and explore, so that better action selection space can be obtained in the future (that is, learning from mistakes).

In the reinforcement learning, there are two objects that can interact with each other: the agent and the environment.

The agent is used to learn a next appropriate action (action) based on a state (state) and a reward (reward) of the environment, to maximize long-term total benefits.

The environment is used to: receive an action executed by the agent, evaluate the action, convert the action into a reward, and feed back the reward to the agent. The reward includes a positive reward and a negative reward.

In addition to the agent and the environment, a reinforcement learning system has several core elements: a policy (policy), a reward function (reward function), and a value function (value function).

The policy is mapping from a state to an action. The policy defines a manner in which the agent selects an action to be executed in a next step.

The reward function is a function used to evaluate an action executed by the agent and calculate a reward value of the action executed by the agent.

The value function is a function used to predict a long-term return value of a state or an action. In some cases, a value of the value function may be represented as a weighted accumulation of reward values of a plurality of reward functions in a plurality of future states starting from one state.

Action space is a set of all possible actions.

State space is a set of all possible states.

(2) Neural network

The neural network may include a neuron. The neuron may be an operation unit that uses $x_s$ and an intercept of 1 as an input. An output of the operation unit may be as follows:

$$h_{W,b}(x) = f\left(W^T x\right) = f(\sum_{s=1}^{n} W_s x_s + b)$$

s=1, 2, ..., n, n is a natural number greater than 1, $W_s$ is a weight of $x_s$, and b is a bias of the neuron. f is an activation function (activation function) of the neuron, and is used to perform non-linear transformation on a feature obtained in the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

(3) Loss function

In a process of training a neural network, because it is expected that an output of the neural network is as close as possible to a predicted value that is actually expected, a predicted value of a current network and a target value that is actually expected may be compared, and then a weight vector of each layer of the neural network is updated based on a difference between the predicted value and the target value (where certainly, there is usually an initialization process before a first update, that is, parameters are preconfigured for all layers of the deep neural network). For example, if the predicted value of the network is large, the weight vector is adjusted to decrease the predicted value, and adjustment is continuously performed, until the neural network can predict the actually expected target value or a value that is very close to the target value that is actually expected. Therefore, "how to obtain, through comparison, the difference between the predicted value and the target value" needs to be predefined. This is a loss function (loss function) or an objective function (objective function). The loss function and the objective function are important equations for measuring the difference between the predicted value and the target value. The loss function is used as an example. A larger output value (loss) of the loss function indicates a larger difference. Therefore, training of the neural network is a process of minimizing the loss as much as possible.

Embodiments of this application provide a device control method. The control method is based on reinforcement learning. This helps implement energy consumption optimization of a device.

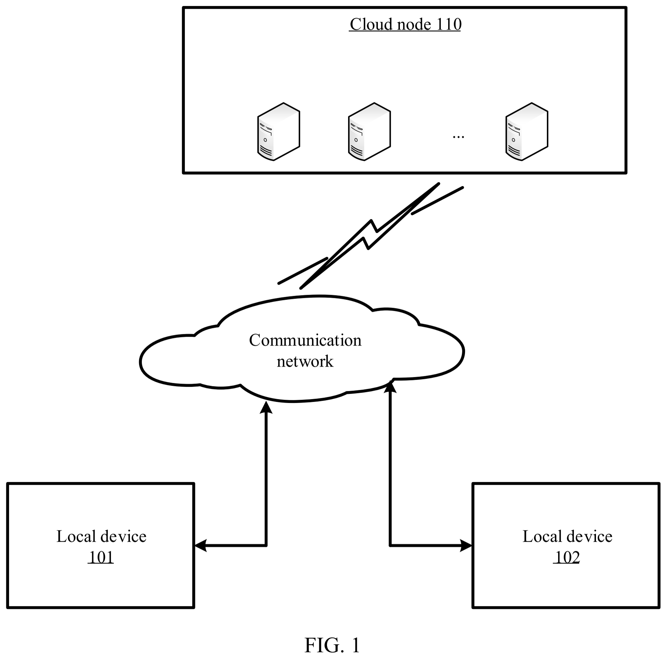

FIG. 1 is a diagram of a system architecture according to an embodiment of this application. A cloud node 110 may be implemented by one or more servers. The cloud node 110 is a node in a cloud environment. For example, the cloud node 110 may be a virtual machine instance, a container instance, a physical server, or the like. Local devices (for example, a local device 101 and a local device 102) may interact with the cloud node. Each local device may represent any computing device, for example, a personal computer, a computer workstation, a smartphone, a tablet computer, an air conditioner, or the like.

The local device may be used as a terminal device in an edge environment. Each local device may interact with the cloud node through a communication network of any communication mechanism/communication standard. The communication network may be a wide area network, a local area network, a point-to-point connection, or any combination thereof.

To better describe a control method in embodiments of this application, the following first describes a control system in embodiments of this application.

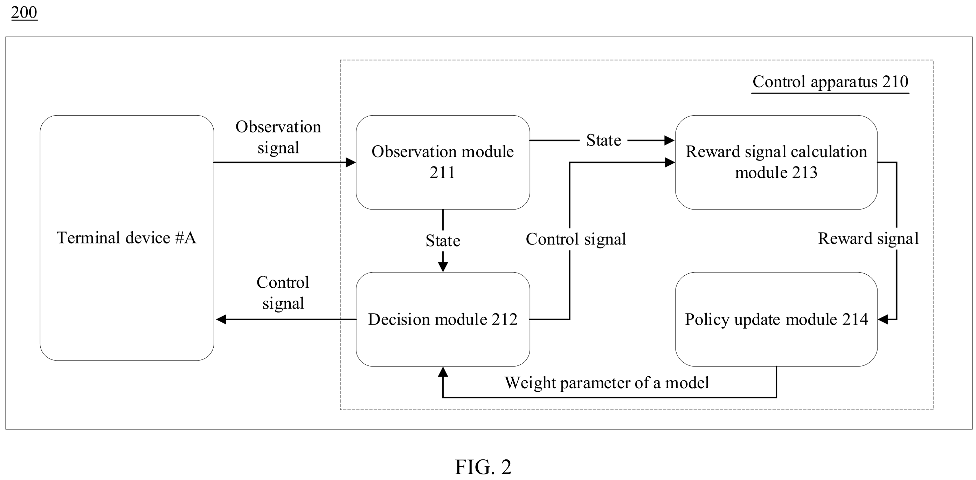

FIG. 2 is a diagram of a device control system according to an embodiment of this application. As shown in FIG. 2, the system 200 in this embodiment of this application includes a control apparatus 210.

The control apparatus 210 may control a terminal device #A based on a reinforcement learning model.

The reinforcement learning model may use a plurality of forms of reinforcement learning algorithms. For example, the reinforcement learning model may use a reinforcement learning algorithm based on an actor-critic (actor-critic) framework. For example, the reinforcement learning model may include any one of the following: a deep deterministic policy gradient (deep deterministic policy gradient, DDPG), a soft actor-critic (soft actor-critic, SAC), or the like.

In the solution in this embodiment of this application, in the control apparatus 210, one reinforcement learning model may be deployed, or a plurality of reinforcement learning models may be deployed. For ease of description, one reinforcement learning model is mainly used as an example for description when the system 200 is described.

It should be understood that locations, quantities, and the like of modules, units, and the like in FIG. 2 are merely examples, and do not constitute a limitation on the solution in this embodiment of this application. For example, in the system shown in FIG. 2, the terminal device #A and the control apparatus 210 are separately shown for ease of description. The terminal device #A and the control apparatus 210 are not limited to being devices independent of each other. The control apparatus 210 may be deployed inside the terminal device #A, or the control apparatus 210 may be deployed in another local device that is not the terminal device #A shown in FIG. 2, for example, a smartphone, a tablet computer, or a personal computer. In embodiments of this application, an example in which the control apparatus is a terminal device is mainly used for description, and does not constitute a limitation on the solutions in embodiments of this application.

As shown in FIG. 2, the control apparatus 210 includes an observation module 211, a decision module 212, a reward signal calculation module 213, and a policy update module 214.

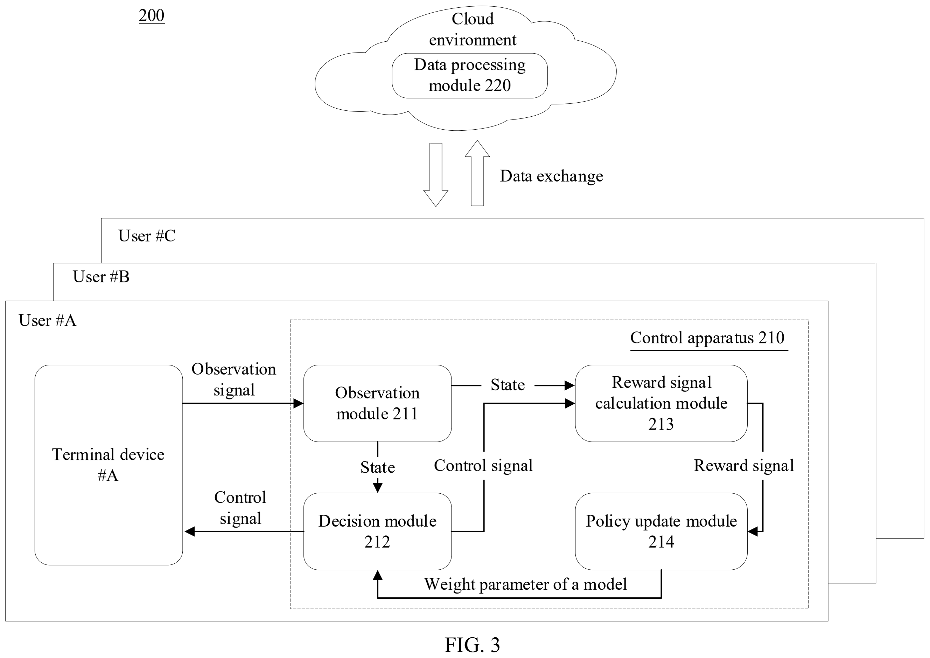

FIG. 3 is a diagram of another device control system according to an embodiment of this application. A main difference between FIG. 3 and FIG. 2 is that the system 200 shown in FIG. 3 further includes a data processing module 220 located on a cloud. The control apparatus 210 is located in an edge environment in which the terminal device #A is located. The data processing module 220 may interact with control apparatuses corresponding to a plurality of terminal devices. For example, terminal devices corresponding to a user #A, a user #B, and a user #C shown in FIG. 3 are respectively a terminal device #A, a terminal device #B, and a terminal device #C. The data processing module 220 may interact with control apparatuses corresponding to the terminal device #A, the terminal device #B, and the terminal device #C. A quantity of users in FIG. 3 is merely an example, and does not constitute a limitation on the solution in this embodiment of this application.

The data processing module 220 based on a local-cloud communication architecture exchanges information with a local device, so that information sharing and collaborative processing can be implemented. For example, content of information sharing between the data processing module 220 and the edge environment may include at least one of the following: interaction data, environment data, a parameter of a reward function, a parameter of an agent model, a training parameter of the agent model, and the like. For example, collaborative processing of the data processing module 220 may include: performing feature extraction on environment information of a terminal device, and guiding, based on an extracted environment feature, the cloud to allocate multi-source data to different terminal devices. For specific descriptions, refer to the following descriptions. Details are not described herein.

For ease of description, control of the terminal device #A is mainly used as an example for description in this embodiment of this application. The control apparatuses of the terminal device #B and the terminal device #C may perform operations similar to those of the control apparatus 210 of the terminal device #A.

The following describes the modules.

The observation module 211 is configured to obtain a state of the terminal device #A. As shown in FIG. 2, the state of the terminal device #A may be used as inputs of the decision module 212 and the reward signal calculation module 213.

In this embodiment of this application, the state of the terminal device #A may also be referred to as a state observation signal of the terminal device #A or a state signal of the terminal device #A.

For example, the observation module 211 may be configured to: read a real-time raw state $S_{raw}$ (the observation signal in FIG. 2) from the terminal device #A, and perform data preprocessing on the read raw state $S_{raw}$, to obtain a state S

of the terminal device #A.

For example, the observation module 211 may read data (the raw state $S_{raw}$) from the terminal device #A in real time by using $\Delta t$ as a sampling interval, and perform data preprocessing, to obtain the state S of the terminal device #A.

The raw state $S_{raw}$ of the terminal device #A may include one dimension, or may include a plurality of dimensions.

For example, the terminal device #A is an air conditioner. The air conditioner may be a heating ventilation and air conditioning (heating ventilation and air conditioning, HVAC) air conditioner. State space of the raw state $S_{raw}$ of the terminal device #A may include at least one of the following: an outdoor temperature $T_{out}$, an indoor temperature $T_{in}$, indoor humidity $H_{in}$, energy consumption $P_{HVAC}$ of the air conditioner, an airflow $F_{HVAC}$ of a fan of the air conditioner, a setting temperature $T_{DEC_{set}}$ of a direct evaporative cooler, a setting temperature $T_{IEC_{set}}$ of an indirect evaporative cooler, or a setting temperature $T_{CCoil_{set}}$ of a cooling coil. For example, the observation module 211 may read information of at least one dimension from the terminal device #A as the raw state $S_{raw}$, perform preprocessing on the raw state, and input a preprocessing result (the state S) to the decision module 212 and the reward signal calculation module 213.

For example, the state space of the raw state of the terminal device #A may include all the foregoing dimensions, and the state space may be represented as $S_{raw} = [T_{out}, T_{in}, H_{in}, P_{HVAC}, F_{HVAC}, T_{DEC_{set}}, T_{IEC_{set}}, T_{CCoil_{set}}]$.

In the solution in this embodiment of this application, the state space of the terminal device #A not only includes the indoor temperature and the energy consumption of the air conditioner, but also includes information of another dimension, so that the decision module 212 can select a control action based on more comprehensive information. This helps improve effect of energy consumption optimization.

A data preprocessing manner may be set as required. For example, data preprocessing may include normalization preprocessing. To be specific, the observation module 211 may perform normalization preprocessing on each dimension in the raw state $S_{raw}$, to obtain a state S, of the terminal device #A, required by another module.

For example, the state S of the terminal device #A may meet the following formula:

$$S = \frac{S_{raw} - S_l}{S_u - S_l}$$

$S_l$ represents a lower bound of each dimension in the raw state $S_{raw}$, and $S_u$ represents an upper bound of each dimension in the raw state $S_{raw}$.

If the data preprocessing does not change the dimension of the state space, the state space of the state obtained after the data preprocessing may also include at least one of the foregoing items. For example, if normalization preprocessing is performed on the raw state, state space of the state of the terminal device #A is the same as the state space of the raw state of the terminal device #A.

In this way, data that meets a calculation requirement of a control framework may be obtained by performing data preprocessing on the read raw state.

Alternatively, the observation module 211 may be configured to read the real-time raw state $S_{raw}$ from the terminal device #A, and use the raw state $S_{raw}$ as the state of the terminal device #A.

In other words, the observation module 211 may not perform data preprocessing on the raw state, but directly input the raw state to the decision module 212 and the reward signal calculation module 213.

For example, the observation module 211 may read the information of the at least one dimension from the terminal device #A as the raw state $S_{raw}$, and input the raw state to the decision module 212 and the reward signal calculation module 213.

It should be understood that the foregoing is merely an example, and does not constitute a limitation on the state space in this embodiment of this application. In another implementation, the state space may further include information of another dimension. In addition, for different devices, dimensions of states of the devices may be adaptively set. For example, the terminal device #A may be a heater, and state space of the heater may include an indoor temperature, energy consumption of the heater, or the like. For another example, the terminal device #A may be an air purifier, and state space of the air purifier may include a clean air delivery rate, energy consumption of the air purifier, or the like. This is not limited in this embodiment of this application.

The decision module 212 may be configured to determine the control action based on the state of the terminal device #A.

For example, a state $S_t$ of the terminal device #A is input to the decision module 212, and the decision module 212 selects a control action $a_t$, namely, a control action $a$ in the state $S_t$, where $S_t$ is the state S, of the terminal device #A at a $t^{th}$ moment, obtained by the observation module 211, and t is a positive integer.

In this embodiment of this application, the control action may also be referred to as an action, an action signal, or a control action signal.

The reinforcement learning model includes an agent model, and the agent model may be used as the decision module 212. In other words, the agent model may be deployed in the decision module 212.

An output of the decision module 212 may be fed back to the terminal device #A. In other words, the agent module interacts with the terminal device #A. For example, the output of the decision module 212 may be fed back to an execution module (not shown in the figure) in the terminal device #A, and a control quantity is a corresponding control quantity directly controlled by the terminal device #A. For example, the control action may be used as the control quantity. Alternatively, there is a mapping relationship between the control action and the control quantity. The execution module may determine, based on the mapping relationship, the control quantity corresponding to the control action.

The control action of the terminal device #A may include one dimension, or may include a plurality of dimensions.

For example, the terminal device #A is an air conditioner. Control action space of the terminal device #A may include at least one of the following: a rotational speed setting command signal $a_{COM}$ of a compressor, a temperature setting command signal $a_{DEC}$ of a direct evaporative cooler, a temperature setting command signal $a_{IEC}$ of an indirect evaporative cooler, a temperature setting command signal $a_{CCoil}$ of a cooling coil, or a fan airflow setting command signal $a_{FUN}$ of the air conditioner. The fan airflow setting command signal $a_{FUN}$ of the air conditioner may include an indoor-fan airflow setting command signal of the air conditioner and/or an outdoor-fan airflow setting signal of the air conditioner. That is, the decision module 212 outputs the information of the at least one dimension as the control action based on the input state of the terminal device #A, and feeds back the control action to the terminal device #A.

For example, the control action space of the terminal device #A may include all the foregoing dimensions, and the control action space may be represented as $a=[a_{COM},a_{DEC},a_{CCoil},a_{FUN}]$.

In the solution in this embodiment of this application, the control action space of the terminal device #A may include a plurality of dimensions. This helps control the air conditioner in a plurality of manners, and helps improve effect of energy consumption optimization.

It should be understood that the foregoing is merely an example, and does not constitute a limitation on the control action space in this embodiment of this application. In addition, for different devices, dimensions of control actions of the devices may be adaptively set. For example, the terminal device #A may be a heater, and control action space of the heater may include a temperature setting command signal or the like. For another example, the terminal device #A may be an air purifier, and control action space of the air purifier may include an air speed setting command of the air purifier or the like. This is not limited in this embodiment of this application.

The control action signal of the terminal device #A may be a continuous signal, or may be a discrete signal.

A value range of the control action may be set as required. This is not limited in this embodiment of this application.

For example, the agent may include: a policy function in an actor framework, a value function in a critic framework, another feature extraction function, another behavior decision related function, or the like.

For example, the agent may perform fitting by using a machine learning model. To be specific, the agent model may use the machine learning model, for example, a linear model, a polynomial model, a kernel function model, or a deep neural network model.

The deep neural network model is used as an example. For example, the agent model may include two deep neural networks in an actor-critic (actor-critic) framework: an actor network and a critic network. In other words, the decision module 212 includes the actor network and the critic network.

An actor network $\mu(\cdot)$ is determined by a parameter vector $\phi$. The parameter vector $\phi$ of the actor network may also be referred to as a weight parameter of the actor network.

An input of the actor network includes a state input to the decision module 212. An output of the actor network may include a control action in this state. The actor network is used to output a control action based on the input state, as shown in $a_t = \mu(S_t,\phi)$.

An input of the critic network includes a state input to the decision module 212 and the control action output by the actor network. An output of the critic network includes a value of the control action. The critic network is used to evaluate, based on the input state and the control action output by the actor network, an impact degree of the state and the control action on an energy consumption optimization task. In other words, the value evaluation network is used to determine a value $q_t$ of the control action, as shown in $q_t=Q(S_t,a_t,\theta)$. The value of the control action is related to the impact degree of the control action on the energy consumption optimization task.

A critic network $Q(\cdot)$ is determined by a parameter vector $\theta$. The parameter vector $\theta$ of the critic network $Q(\cdot)$ may also be referred to as a weight parameter of the critic network.

Structure attributes of the actor network and the critic network may be set as required. The structure attributes of the actor network and the critic network may include any one or more of the following: a quantity of layers of the network, a quantity of neurons at each layer, a type of a neuron at each layer, a type of an activation function, or the like. The structure attribute may also be referred to as a structure parameter.

Further, when the control system 200 includes the data processing module 220, the data processing module 220 may receive, store, and manage parameters of agent models in control apparatuses corresponding to the terminal devices.

The parameter of the agent model may include a structure parameter and/or a weight parameter of the agent model.

For example, the data processing module 220 may receive the parameter, of the agent model, sent by the control apparatus 210. For example, the decision module 212 may upload the parameter of the agent model.

For example, the data processing module 220 may send the parameter of the agent model to the control apparatus 210. For example, the decision module 212 may download the parameter of the agent model.

For example, after the terminal device is deployed, the agent model may not be deployed in the decision module 212. In this case, the decision module 212 may download the structure parameter and the weight parameter of the agent model from the data processing module 220, to determine the agent model, and interact with the terminal device based on the agent model.

For another example, in a working process of the terminal device, the decision module 212 interacts with the terminal device based on a currently deployed agent model. In this process, the decision module 212 may download the weight parameter of the agent model from the data processing module 220, to update a weight parameter of the currently used agent model to obtain an updated agent model, and then interact with the terminal device based on the updated agent model.

The reward signal calculation module 213 is configured to calculate a value of a reward function corresponding to the control action, namely, a reward signal.

Specifically, the reward signal calculation module 213 obtains, from the observation module, a state $s_{t+1}$ at a next moment of a $t^{th}$ moment (namely, a state at a $(t+1)^{th}$ moment) obtained when a control action $a_t$ is performed, and calculates, based on the state $s_{t+1}$, a value $R_t$ of a reward function corresponding to the control action $a_t$.

A distance between the $t^{th}$ moment and the $(t+1)^{th}$ moment is a sampling interval $\Delta t$ of the observation module 211.

For example, the $(t+1)^{th}$ moment may be a current moment, and the reward signal calculation module 213 obtains a current state from the observation module, and calculates, based on the current state, a value of a reward function corresponding to a control action at a previous moment.

The reward function is related to a reinforcement learning task. In the solution in this embodiment of this application, the control system 200 is configured to optimize energy consumption of the device. In this case, the reward function is related to energy consumption of the terminal device #A.

For example, the terminal device #A is an air conditioner. A value of a reward function corresponding to a control action at a previous moment is related to energy consumption of the air conditioner at a current moment and an indoor temperature at the current moment. That is, the reward function is used to quantify the energy consumption of the air conditioner and a control level of the indoor temperature.

For example, the value $R_t$ of the reward function may meet the following formula:

$$R_t = -\lambda_1 P_t^{t1} - \lambda_2 P_t^{t2} - \lambda_3 P_t^{power}$$

$\lambda_1$, $\lambda_2$, and $\lambda_3$ respectively represent weight parameters corresponding to three items, $P_t^{t1}$ indicates a difference between an indoor temperature $T_{in}$ in the state $S_{t+1}$ and a preset temperature $T_C$, $P_t^{t2}$ is a penalty item, and is used to punish a case in which a preset temperature limit is exceeded, and $P_t^{power}$ indicates energy consumption $P_{HAVC}$ of the air conditioner in the state $S_{t+1}$.

For example, $P_t^{t1}$ may meet the following formula:

$$P_t^{t1} = e^{-\lambda_g (T_{in} - T_C)^2}$$

$\lambda_g$ represents a weight parameter that controls a shape of a Gaussian penalty term. For example, the preset temperature $T_C$ may be a preset comfort temperature, for example, 23°C.

For example, $P_t^{t2}$ may meet the following formula:

$$P_t^{t2} = \left[ T_{in} - T_U \right]_+ + \left[ T_L - T_{in} \right]_+$$

$T_U$ represents a preset upper temperature limit, for example, 23.5°C, $T_L$ represents a preset lower temperature limit, for example, 22.5°C, and $[z]_+$ represents that a larger value between z and 0 is used. That is, if z is greater than or equal to 0, $[z]_+$ =z; or if z is less than 0, $[z]_+$ =0. For example, $T_U$ =23.5°C and $T_L$ =22.5°C. If $T_{in}$ =25°C, a value of a first item is

a value of $T_{in}$ - $T_U$, and a value of a second item is set to 0; or if $T_{in}$ =20°C, a value of a first item is set to 0, and a value of a second item is a value of $T_L$ - $T_{in}$.

For example, $P_t^{power}$ may meet the following formula:

$$P_t^{power} = P_{HAVC}$$

In this way, in the solution in this embodiment of this application, the reward function is used to quantize the energy consumption of the air conditioner and the control level of the indoor temperature. This helps the air conditioner be capable of implementing energy consumption optimization while ensuring temperature adjustment. For example, the value of the reward function may be used as training data for subsequent training of the agent model, and the value of the reward function may reflect the energy consumption of the air conditioner and the control level of the indoor temperature. This helps the agent model obtained through subsequent training be capable of meeting requirements of temperature control and energy consumption optimization, so that the air conditioner can implement energy consumption optimization while ensuring temperature adjustment.

For example, different tasks may correspond to different reward functions. The foregoing formula is used as an example. Different reward functions may be obtained by adjusting values of the foregoing weight parameters. For example, for some tasks that have a high requirement on temperature control, values of $\lambda_1$ and $\lambda_2$ may be increased; and for some tasks that have a high requirement on power consumption optimization, a value of $\lambda_3$ may be appropriately increased.

The reward signal calculation module 213 may support a change of the reward function.

In this way, in a working process of the terminal device, the reward function in the reward signal calculation module 213 may be adjusted based on a requirement (for example, based on a task requirement).

It should be understood that the foregoing formula of the reward function is merely an example, and does not constitute a limitation on the solution in this embodiment of this application. A form and a parameter of the reward function may be set as required.

The state $s_t$, the control action $a_t$, the state $s_{t+1}$, and the value $R_t$ of the reward function may be used as one piece of training data, and are used for subsequent training of the decision module. For example, the training data may be stored in a storage module (not shown in the figure) of the control apparatus 210.

For example, the reward signal calculation module 213 may further obtain the state $s_t$ at the tth moment from the observation module, obtain the control action $a_t$ from the decision module 212, and construct a data vector $[s_t, a_t, s_{t+1}, R_t]$. The data vector is a data vector specific to reinforcement learning that complies with a Markov decision process specification. One data vector may be used as one piece of training data. An arrangement sequence of elements in the data vector may be randomly set. This is not limited in this embodiment of this application.

Optionally, when the control system 200 includes the data processing module 220, the training data constructed by the reward signal calculation module 213 may be uploaded to the data processing module 220.

The data processing module 220 may obtain the training data from control apparatuses in a plurality of edge environments, and maintain an entire training data set.

Optionally, when the control system 200 includes the data processing module 220, the data processing module 220 may receive a parameter, of the reward function, sent by the control apparatus 210. That is, the reward signal calculation module 213 may upload the parameter of the reward function.

The data processing module 220 may store and manage parameters of reward functions in reinforcement learning models deployed in control apparatuses corresponding to the terminal devices.

The parameter of the reward function may include a weight parameter and/or a structure parameter of the reward function. The structure parameter of the reward function is used to determine a form/structure of the reward function.

For example, the structure parameter of the reward function may be used to indicate an item in the reward function. The item in the reward function includes temperature control, energy consumption control, and/or the like. The foregoing formula of the reward function is used as an example. In the formula of the reward function, an item corresponding to first two items is temperature control, and an item corresponding to a last item is energy consumption control.

For example, the structure parameter of the reward function may indicate a form used by the item in the reward function, for example, a quadratic function or an exponential function.

For example, the structure parameter of the reward function may indicate an interval of the reward function having a hierarchical structure, for example, a preset temperature limit and/or an energy consumption wall.

Optionally, when the control system 200 includes the data processing module 220, the data processing module 220 may send the parameter of the reward function to the control apparatus 210. That is, the reward signal calculation module 213 may download the parameter of the reward function.

In other words, the reward signal calculation module 213 may determine the reward function based on the parameter, of the reward function, obtained from the cloud.

The parameter of the reward function includes the weight parameter and/or the structure parameter of the reward function. For example, the weight parameters of the reward function may include $\lambda_1$, $\lambda_2$, and $\lambda_3$. The structure parameter of the reward function may indicate an expression form of the formula of the reward function.

For example, the cloud may determine, based on similarities between environments in which source devices corresponding to parameters of a plurality of reward functions stored on the cloud are located and an environment in which the terminal device #A is located, the parameter, of the reward function, sent to the control apparatus 210.

For example, a similarity between an environment in which a source device corresponding to the parameter, of the reward function, sent by the cloud to the control apparatus 210 is located and the environment in which the terminal device #A is located is higher than a similarity between an environment in which a source device corresponding to a parameter of another reward function is located and the environment in which the terminal device #A is located. That is, the cloud selects, from the source devices corresponding to the parameters of the plurality of reward functions, a parameter of a reward function corresponding to a source device that has a highest similarity to the environment in which the terminal device #A is located, and sends the parameter of the reward function to the control apparatus 210.

For a similarity between environments in which two devices are located, refer to the following descriptions. Details are not described herein.

For example, the cloud may determine, based on tasks corresponding to the parameters, of the plurality of reward functions, stored on the cloud and a target task of the control apparatus 210 of the terminal device #A, the parameter, of the reward function, sent to the control apparatus 210.

For example, the cloud may select, from the parameters of the plurality of reward functions, a parameter of a reward function corresponding to a task closest to the target task of the control apparatus 210, and send the parameter of the reward function to the control apparatus 210.

In a working process of the terminal device #A, the reward function may be adjusted based on the data sent by the cloud. For example, the reward function is adjusted based on different task requirements or different working environment requirements. In this way, a manner of calculating the reward signal in the training data may be adjusted, so that a required reinforcement learning model, for example, a reinforcement learning model that adapts to a target task or a target working environment, can be obtained through training in a subsequent training process, thereby improving control performance.

The policy update module 214 is configured to update the weight parameter of the agent model by using one or more pieces of training data, or train the agent model.

For example, the agent model includes an actor network and a critic network. The policy update module 214 is configured to update a weight parameter of the actor network and a weight parameter of the critic network by using $N_{batch}$ pieces of training data.

For ease of understanding, the following uses a DDPG algorithm as an example to describe an update process of the policy update module 214.

In the working process of the terminal device #A, the policy update module 214 may update the agent model for a plurality of times, to implement autonomous learning.

For all the times of update, the policy update module 214 may update the weight parameter of the agent model based on the one or more pieces of training data. Quantities of pieces of training data used for all the times of update may be the same, or may be different.

For example, for all the times of update, the policy update module 214 may obtain the $N_{batch}$ pieces of training data, and perform update based on the $N_{batch}$ pieces of training data, where $N_{batch}$ is a positive integer.

The following describes one update process. For ease of description, in this embodiment of this application, an example in which the $N_{batch}$ pieces of training data are updated once is used for description.

The policy update module 214 updates the parameter of the critic network with a target of reducing a value of a loss function. The value of the loss function of the critic network is determined based on a difference between an output of the critic network and the value of the reward function.

For example, a loss function $L(\theta)$ may meet the following formula:

$$L\left(\theta\right) = \frac{1}{N_{batch}} \sum_{n=1}^{N_{batch}} \left( y_n - Q(S_t^n, a_t^n, \theta) \right)^2$$

$y_n$ represents a temporal difference error (temporal difference error) corresponding to an $n^{th}$ piece of training data $\left[ S_t^n, a_t^n, R_t^n, S_{t+1}^n \right]$ in the $N_{batch}$ pieces of training data. $S_t^n$ represents a sample state #1 in the $n^{th}$ piece of training data, $a_t^n$ represents a sample control action #1 in the sample state, $R_t^n$ represents a sample reward signal #1 corresponding to the sample control action #1, and $S_{t+1}^{n}$ represents a sample state #2 obtained after the sample control action #1 is performed on the terminal device #A. For a manner of generating the training data, refer to related descriptions of the data vector constructed by the reward signal calculation module in the foregoing descriptions. Details are not described herein again.

For example, $y_n$ may meet the following formula:

$$y_{n}=R_{t}^{n}+\gamma Q'\left(S_{t+1}^{n},\mu'\left(S_{t+1}^{n},\phi^{-}\right),\theta^{-}\right)$$

$\gamma$ is a parameter for controlling a discount factor. $Q'(\cdot)$ and $\mu'(\cdot)$ are respectively a target critic network and a target actor network. Setting $Q'(\cdot)$ and $\mu'(\cdot)$ is helpful for implementing stable learning, that is, is helpful for implementing stable training, $\phi^{-}$ represents a weight parameter of the target actor network, and $\theta^{-}$ represents a weight parameter of the target critic network.

The weight parameter $\theta$ of the critic network is updated in a gradient descent manner in a direction of minimizing $L(\theta)$. For example, after one time of update is completed, the weight parameter $\theta^*$ of the critic network may meet the following formula:

$$\theta^{*} = \arg\min_{\theta} L\left(\theta\right)$$

The weight parameter $\phi$ of the actor network is updated in a gradient descent manner based on the output of the critic network.

$$\nabla_{\phi}J \approx \frac{1}{N_{batch}}\sum_{n=1}^{N_{batch}}\nabla_{a}Q\left(S,a,\theta\right)\Big|_{S=S_{t}^{n},a=\mu(S_{t}^{n},\phi)}\nabla_{\phi}\mu\left(S,\phi\right)\Big|_{S=S_{t}^{n}}$$

$J$ represents a loss function of the actor network, $\nabla$ is a gradient operator, $\nabla_{\phi}$ represents a calculation gradient relative to $\phi$, and $\nabla_{a}$ represents a calculation gradient relative to the control action a.

For example, the weight parameter of the target critic network is determined based on the weight parameter of the critic network.

Specifically, the update of the weight parameter of the target critic network is controlled by a flexible factor $\tau$. For example, an updated weight parameter $\theta^{-*}$ of the target critic network may meet the following formula:

$$\theta^{-*} = \tau\theta+\left(1-\tau\right)\theta^{-}$$

For example, the weight parameter of the target actor network is determined based on the weight parameter of the actor network.

Specifically, the update of the weight parameter of the target actor network is controlled by a flexible factor $\tau$. For example, an updated weight parameter $\phi^{-*}$ of the target actor network may meet the following formula:

$$\phi^{-*} = \tau\phi+\left(1-\tau\right)\phi^{-}$$

In the working process of the terminal device #A, the policy update module 214 trains a current agent model, to obtain a new agent model. For example, the current agent model may be an initialized agent model. Alternatively, the current agent model may be a previously trained agent model.

When the system 200 includes the data processing module 220, the data processing module 220 may send the parameter of the agent model to the control apparatus #1. The policy update module 214 may perform training based on the parameter, of the agent model, sent by the cloud. This process may be considered as a transfer learning process. That is, the data processing module 220 may be configured to transfer the weight parameter of the model. For example, at an initial stage when the terminal device #A is deployed in a new working environment, the cloud may send the parameter of the agent model to the control apparatus #1, so that the policy update module 214 can perform training based on the parameter, of the agent model, sent by the cloud, without a need to start training from the beginning. This helps improve training efficiency.

For example, control apparatuses corresponding to the terminal devices may upload parameters of respective agent models of the terminal devices to the cloud. The data processing module 220 may determine, based on similarities between environments in which source devices corresponding to parameters of a plurality of agent models are located and the environment in which the terminal device #A is located, the parameter, of the agent model, sent to the control apparatus 210.

For example, the cloud may send, to the control apparatus 210, a parameter of an agent model corresponding to a source device that has a highest similarity to the environment in which the terminal device #A is located.

For a similarity between environments in which two devices are located, refer to the following descriptions. Details are not described herein.

The following uses an example in which the one or more pieces of training data used for one time of training are the $N_{batch}$ pieces of training data to describe the training data by using examples.

Optionally, when the control system 200 does not include the data processing module 220, the $N_{batch}$ pieces of training data may be local training data obtained by the policy update module 214 from the storage module. The local training data is determined based on interaction data of the terminal device #A. For example, the local training data may be a data vector constructed by the reward signal calculation module 213.

Optionally, when the control system 200 includes the data processing module 220, the $N_{batch}$ pieces of training data may include local training data and/or cloud training data from another device. For the terminal device #A, the cloud training data from the another device may be determined based on interaction data of another terminal device that is not the terminal device #A. For example, the training data of the another device may be determined based on the interaction data of the another terminal device. For a manner of determining the interaction data of the another device, refer to the manner of determining the interaction data of the terminal device #A. Details are not described herein again.

Correspondingly, the interaction data of the terminal device #A may also be used as training data of an agent model corresponding to the another terminal device.

In the solution in this embodiment of this application, the $N_{batch}$ pieces of training data may include the cloud training data of the another device. This helps make full use of the cloud training data, to improve a generalization capability of the reinforcement learning model, that is, improve a generalization capability of a control policy of the agent model.

In a possible implementation, the $N_{batch}$ pieces of training data may be sent by the cloud to the control apparatus 210. In other words, the data processing module 220 determines the $N_{batch}$ pieces of training data and sends the $N_{batch}$ pieces of training data to the control apparatus 210, and the policy update module 214 updates the weight parameter of the agent model based on the $N_{batch}$ pieces of training data.

Optionally, the data processing module 220 determines the $N_{batch}$ pieces of training data based on a similarity between an environment in which a source device corresponding to training data in a training data set of the cloud is located and the environment in which the terminal device #A is located. The source device corresponding to the training data is a terminal device corresponding to a control apparatus that uploads the training data. The terminal device #A may also be referred to as a target device.

In other words, the data processing module 220 may provide, based on an environment similarity, customized data for control apparatuses corresponding to the terminal devices, so that the control apparatuses can efficiently train a local reinforcement learning model.

The data processing module 220 may be configured to perform, on allocation of training data, unbiased sampling following various random distributions (for example, a uniform distribution or a Gaussian distribution) and biased sampling based on a prioritized experience replay (prioritized experience replay) technology.

For example, the data processing module 220 performs random sampling on the $N_{batch}$ pieces of training data from the training data set of the cloud based on a similarity between an environment in which a source terminal device corresponding to training data in the training data set of the cloud is located and the environment in which the terminal device #A is located, and sends the $N_{batch}$ pieces of training data to the terminal device #A.

For example, a higher similarity between the environment in which the source terminal device corresponding to the training data is located and the environment in which the terminal device #A is located indicates a higher probability that the training data is sampled to the $N_{batch}$ pieces of training data.

For example, a probability $P_i$ that an i$^{th}$ piece of training data in the training data set of the cloud is collected in random sampling complies with the following formula:

$$P_i = \frac{\partial_i}{\sum_{j=1:N_{batch}} \partial_j}$$

That is, the $N_{batch}$ pieces of training data may be random training data obtained after importance sampling processing. $\partial_i$ represents a similarity between an environment in which a source device corresponding to the i$^{th}$ piece of training data is located and an environment in which the target device (for example, the terminal device #A) is located, and i is a positive integer. $\partial_j$ represents a similarity between an environment in which a source device corresponding to a j$^{th}$ piece of training data is located and the environment in which the target device (for example, the terminal device #A) is located.

In the solution in this embodiment of this application, the policy update module 214 updates the weight parameter of the agent model based on a correlation of multi-source training data. To be specific, the $N_{batch}$ pieces of training data may be determined based on a similarity between an environment in which a source device corresponding to the training data is located and an environment in which a target terminal device is located. This helps enable a working environment of the source device corresponding to the $N_{batch}$ pieces of training data to be similar to or the same as a working environment of the terminal device #A as much as possible, so that a control policy learned by the agent model adapts to a local working environment, and effect of energy consumption optimization of the terminal device is improved. In addition, training data of the another device may be further used to improve a generalization capability of the control policy.

It should be understood that the foregoing is merely an example, and the data processing module 220 may alternatively determine the $N_{batch}$ pieces of training data in another manner. For example, the data processing module 220 may perform random sampling in the training data set of the cloud, to obtain the $N_{batch}$ pieces of training data, and probabilities that all pieces of training data in the training data set of the cloud are sampled are the same.

In another possible implementation, the policy update module 214 autonomously determines the $N_{batch}$ pieces of training data, and updates the weight parameter of the agent model based on the $N_{batch}$ pieces of training data.

For example, the cloud may send the training data of the another device to the control apparatus 210. The training data of the another device and the local training data are stored in the storage module together. The policy update module 214 may sample the $N_{batch}$ pieces of training data from the storage module.

For a specific manner in which the policy update module 214 determines the $N_{batch}$ pieces of training data, refer to a manner in which the data processing module 220 determines the $N_{batch}$ pieces of training data. To avoid repetition, details are not described herein again.

Alternatively, the $N_{batch}$ pieces of training data may be determined by another module or apparatus. This is not limited in this embodiment of this application.

The following describes a similarity between environments in which two terminal devices are located.

Optionally, the similarity between the environments in which the two terminal devices are located may be determined based on a similarity between environment features of the two terminal devices.

The environment feature of the terminal device may be obtained by performing feature extraction on environment information of the terminal device.

For example, feature extraction may be performed on the environment information of the terminal device by using a machine learning feature extraction method, to obtain the environment feature of the terminal device.

For example, the machine learning feature extraction method may include a feature extraction method based on a deep learning model, a feature extraction method based on a self-encoder, or the like.

For example, the terminal device is an air conditioner. The environment information may include at least one of the following: a geographical location, a seasonal temperature feature, a working time period, an energy consumption requirement, a common temperature setting, a quantity of heat sources (for example, users), an installation location the air conditioner, a house type, or the like.

For example, the environment information of the terminal device may be represented as a D-dimensional vector E. D is a positive integer greater than 1. For example, D=5, and dimensions of the vector E may respectively correspond to a geographical location, a seasonal temperature feature, a working time period, an energy consumption requirement, and a common temperature setting. Feature extraction is performed on the vector E. For example, the vector E is encoded or mapped to a $D_{encode}$-dimensional vector $E_{encode}$, and the vector $E_{encode}$ is the environment feature of the terminal device. $D_{encode}$ is a positive integer less than D.

Further, data $e_{encode}$ of dimensions in the vector $E_{encode}$ may meet $e_{encode} \in [0,1]$.

In this way, feature extraction helps obtain a feature that can better reflect the working environment of the terminal device, to help ensure that a similarity, between environment features of the terminal devices, obtained through calculation can more accurately reflect a similarity between working environments of the terminal devices. In addition, an environment feature of a lower dimension is obtained through feature extraction, so that a calculation amount during similarity calculation can be reduced, and data processing efficiency can be improved.

For example, the similarity between the environment features of the two terminal devices is positively correlated with a Euclidean distance between the environment features of the two terminal devices.

For example, the similarity between the environment features of the two terminal devices may be the Euclidean distance between the environment features of the two terminal devices. The similarity $\partial$ between the environment features of the two terminal devices may meet the following formula:

$$\partial = 1 - \frac{\left\| E_{encode}^{a} - E_{encode}^{b} \right\|_{2}}{D_{encode}}$$

$E_{encode}^{a}$ represents an environment feature of the target device, and $E_{encode}^{b}$ represents an environment feature of the source device.

Optionally, the similarity between the environments in which the two terminal devices are located may be determined based on the similarity between the environment features of the two terminal devices. That is, feature extraction is not performed on the environment information of the terminal device, and a similarity between environments in which the two terminal devices are located is determined based on a similarity between environment information of the two terminal devices.

For example, the similarity between the environment information of the two terminal devices is positively correlated with the Euclidean distance between the environment information of the two terminal devices.

It should be understood that a manner of determining a similarity between two features by using the Euclidean distance is merely an example, and does not constitute a limitation on the solution in this embodiment of this application.

For example, the similarity between the environments in which the two terminal devices are located may be determined by the data processing module 220.

The data processing module 220 may store and manage environment data of the devices, to implement collaborative processing, that is, calculate a correlation between different environment data; and guide the cloud to allocate multi-source data to the terminal devices in view of this. A similarity between environments in which different terminal devices are located may be used to reflect a correlation between multi-source data.

For example, the data processing module 220 may receive environment information of the terminal devices, perform feature extraction on the environment information of the terminal devices, to obtain environment features of the terminal devices, and determine, based on the environment features of the devices, a similarity between an environment feature of another terminal device that is not the terminal device #A and an environment feature of the terminal device #A.

For another example, the data processing module 220 may receive environment information of the terminal devices, and determine, based on the environment information of the devices, a similarity between environment information of another terminal device that is not the terminal device #A and environment information of the terminal device #A.

For another example, the data processing module 220 may receive environment features of the terminal devices, and determine, based on the environment features of the devices, a similarity between an environment feature of another terminal device that is not the terminal device #A and an environment feature of the terminal device #A.

In another possible implementation, a similarity between working environments of two terminal devices may alternatively be determined by another module. For example, the data processing module 220 may send, to the control apparatus 210, an environment feature or environment information of another terminal device that is not the terminal device #A, and the policy update module 214 calculates the similarity.

A ratio of a quantity of pieces of local training data to a quantity of pieces of cloud training data in the $N_{batch}$ pieces of training data may be adjusted as required.

For example, the ratio of the quantity of pieces of local training data to the quantity of pieces of cloud training data in the $N_{batch}$ pieces of training data is related to a working scenario of the terminal device #A.

When the terminal device #A is in a scenario #1, a ratio of the quantity of pieces of local training data to a quantity of pieces of training data of another device in the $N_{batch}$ pieces of training data is less than a ratio of the quantity of pieces of local training data to the quantity of pieces of training data of the another device in the $N_{batch}$ pieces of training data in a scenario #2. The scenario #1 is different from the scenario #2.

The following describes the scenario #1 and the scenario #2 by using examples.

A data volume of training data obtained by the control apparatus 210 through interaction with the terminal device #A in the scenario #1 is less than a data volume of training data obtained by the control apparatus 210 through interaction with the terminal device #A in the scenario #2.

If a small amount of data is currently obtained through interaction between the control apparatus 210 and the terminal device #A, training of the agent model may depend more on cloud training data of the another terminal device.

For example, the scenario #1 may be an initial phase in which the terminal device #A is deployed in a current working environment.

For example, the scenario #1 may be an initial phase in which the terminal device #A is deployed in a working environment after delivery.

For another example, when the working environment of the terminal device #A greatly changes, for example, the terminal device moves to another working environment (for example, a scenario in which a user moves), an initial phase of deploying the terminal device #A to a new working environment may be considered as the scenario #1.

When a data volume of training data obtained by the control apparatus 210 through interaction with the terminal device #A is small, more cloud training data of another device is depended on. This helps enable the agent model to quickly learn, to improve effect of energy consumption optimization.

Further, the $N_{batch}$ pieces of training data may be obtained after importance sampling processing. In the training data set of the cloud, a higher similarity between the working environment of the source device corresponding to the training data and the working environment of the terminal device #A indicates a higher probability that the training data is sampled to the $N_{batch}$ pieces of training data. In this way, when a data volume of the local training data is small, more cloud training data of a terminal device that has a high similarity to a working environment of the terminal device #A may be depended on. This helps enable the control policy to adapt to the local working environment, so that learning effect of the agent model is further improved, thereby improving effect of energy consumption optimization.

For example, the scenario #2 may be a stable phase in which the terminal device is deployed in a current working environment.

If a specific amount of training data is currently accumulated during interaction between the control apparatus 210 and the terminal device #A, a training process may depend more on the local training data, so that the control policy is more adaptive to the local working environment, a user habit, and the like, thereby improving effect of energy consumption optimization. In addition, a part of cloud training data may be further used to improve a generalization capability of the control policy.

A ratio of a quantity of pieces of local training data to a quantity of pieces of cloud training data in the $N_{batch}$ pieces of training data may be determined by the data processing module 220, or may be determined by the control apparatus 210.

For example, the control apparatus 210 may notify the data processing module 220 of the scenario in which the terminal device is located. The data processing module 220 may determine, based on the scenario, the ratio of the quantity of pieces of local training data to the quantity of pieces of cloud training data in the $N_{batch}$ pieces of training data, to further determine the $N_{batch}$ pieces of training data, and send the $N_{batch}$ pieces of training data to the control apparatus 210.

For another example, the control apparatus 210 may determine, based on the scenario in which the terminal device is located, the ratio of the quantity of pieces of local training data to the quantity of pieces of cloud training data in the $N_{batch}$ pieces of training data, and notify the data processing module 220 of the ratio. The data processing module 220 determines the $N_{batch}$ pieces of training data based on the ratio, and sends the $N_{batch}$ pieces of training data to the control apparatus 210.

For another example, the control apparatus 210 may determine, based on the scenario in which the terminal device is located, the ratio of the quantity of pieces of local training data to the quantity of pieces of cloud training data in the $N_{batch}$ pieces of training data, to further determine the $N_{batch}$ pieces of training data.

It should be understood that the foregoing is merely an example, and the ratio of the quantity of pieces of local training data to the quantity of pieces of cloud training data in the $N_{batch}$ pieces of training data may alternatively be determined in another manner. This is not limited in this embodiment of this application.

In the working process of the terminal device #A, the policy update module 214 may update the weight parameter of the agent model in a same update mode, or may update the weight parameter of the agent model in different update modes.

For example, the update mode used by the policy update module 214 is related to the working scenario of the terminal device #A.

Optionally, when the terminal device #A is in the scenario #1, the policy update module 214 updates the weight parameter of the agent model in a first update mode; or when the terminal device #A is in the scenario #2, the policy update module 214 updates the weight parameter of the agent model in a second update mode.

The scenario #1 is different from the scenario #2, and the first update mode is different from the second update mode.

In other words, in different scenarios, different update modes may be used to train the agent model.

A difference between the first update mode and the second update mode includes at least one of the following: a quantity of update times of the weight parameter of the agent model or a start moment of the update.

For example, a quantity of update times of the weight parameter of the agent model in the first update mode is greater than a quantity of update times of the weight parameter of the agent model in the second update mode.

For example, in the first update mode, the policy update module 214 continuously updates the weight parameter of the currently used agent model for M times, and deploys, in the decision module 212, the agent model obtained after the M times of update. M is an integer greater than 1. In the second update mode, the policy update module 214 updates the currently used agent model once, and deploys, in the decision module 212, the agent model obtained after the update.

For example, in the first update mode, after the currently used agent model interacts with the terminal device #A for a plurality of times, the weight parameter of the currently used agent model is updated. In the second update mode, in a process of one time of interaction between the currently used agent model and the terminal device #A, the weight parameter of the currently used agent model is updated, and an agent model that interacts with the terminal device #A next time is the updated agent model.

For example, the first update mode may be an intensive update mode. The second update mode may be a trickle update mode. The following uses this as an example to describe the two update modes.

In the first update mode, after the currently used agent model has been deployed for a period of time, the weight parameter of the currently used agent model is updated for M times at a time, to obtain an updated agent model.

Quantities of pieces of training data used for the M times of update may be the same or may be different. For example, for each of the M times of update, the policy update module 214 updates the weight parameter of the agent model based on the $N_{batch}$ pieces of training data.

For example, for a manner of obtaining the $N_{batch}$ pieces of training data used in each time of update, refer to the foregoing descriptions. For example, before one time of update, the policy update module 214 randomly samples the $N_{batch}$ pieces of training data from the storage module, and then performs training in view of this. The process is repeated for M times to complete M times of updating of the weight parameter of the agent model.

For a specific process of each time of update, refer to the foregoing DDPG algorithm, or another update manner may be used. This is not limited in this embodiment of this application.

For example, in the intensive update mode, the reinforcement learning model may interact with the system by using a random policy to generate a specific amount of data to warm up (warm up) a neural network. Subsequently, the model continuously interacts with the terminal device #A and stores the interaction data in the data storage module, during which the model is not updated. After the interaction with the environment exceeds a specific quantity, the agent model is updated for M times at a time, the $N_{batch}$ pieces of data are randomly sampled from the data storage module each time, and weights of the actor network and the critic network are intensively updated by using the DDPG algorithm.

An example of an update procedure in the intensive update mode is shown below.

The update procedure includes three phases: an initialization phase, a pre-training phase, and a training phase.

In the initialization phase, the following operations may be performed:

using a parameter $\theta$ and a parameter $\phi$ to randomly initialize the critic network and the actor network, respectively; using a parameter $\theta^-$ and a parameter $\phi^-$ to initialize the target critic network and the target actor network, respectively, where in an initialization process, the parameter $\theta^-$ may be the parameter $\theta$, and the parameter $\phi^-$ may be the parameter $\phi$;
initializing a replay buffer, namely, an area, in the storage module, used to store the training data;
initializing a Gaussian distribution $N(0,\sigma)$ as exploration noise of the terminal device #A, and $\sigma$ represents a standard deviation; and
initializing a quantity P of maximum episodes (episodes), where P is a positive integer.

In the pre-training phase, between a first moment and a $T_{initial}$th moment when pre-training starts, interaction is performed with the terminal device #A by using a random policy to obtain a specific amount of training data to warm up (warm up) the critic network and the actor network, and the collected training data is stored in the replay buffer.

In the training phase, P episodes of update are performed, and the following process is performed for each episode.

M times of update are performed in each episode, where data may be collected before the M times of update in each episode start.

For example, in each episode, when a quantity of pieces of training data is greater than or equal to a threshold #2, the M times of update are performed at a time.

Alternatively, in each episode, when a collection time of the training data is greater than or equal to a threshold #3, the M times of update are performed at a time. For example, the threshold #3 may be one year. At a sampling interval of 15 minutes, 35040 pieces of training data that are obtained through interaction between the terminal device #A and the control apparatus 210 and that are collected in one year are collected. The following uses this as an example to describe a process of collecting the training data. The process of collecting the training data may include the following steps.

S11: Initialize the state space S of the terminal device #A.

S12: Determine the control action based on the current actor network and the exploration noise.

For example, the control action may meet the following formula:

$$a_t = \mu(s_t, \phi) + N_t$$

$N_t$ may represent exploration noise corresponding to a $t$th moment.

The terminal device #A adjusts an operating parameter based on the control action $a_t$, the observation module obtains a new state $S_{t+1}$, and the reward signal calculation module calculates a corresponding reward signal $R_t$.

S13: Store $(S_t, a_t, R_t, S_{t+1})$ in the replay buffer.

Step S12 and step S13 are repeated within one year. In this process, if the state of the terminal device #A reaches a preset final state or the target is achieved, the state space S of the terminal device #A is initialized.

After collection of the training data is completed, the M times of update start to be performed. Each update process of the M times of update may include the following steps.

S14: Obtain the $N_{batch}$ pieces of training data from the replay buffer.

S15: Calculate a target value.

For example, the target value may meet the following formula:

$$y_n = R_t^n + \gamma Q'\left(S_{t+1}^n, \mu'\left(S_{t+1}^n, \phi^-\right), \theta^-\right)$$

S16: Update the weight parameter of the critic network by minimizing the value of the loss function.

For example, the loss function meets the following formula:

$$L(\theta) = \frac{1}{N_{batch}} \sum_{n=1}^{N_{batch}} \left(y_n - Q(S_t^n, a_t^n, \theta)\right)^2$$

S17: Update the weight parameter of the actor network by using a deterministic policy gradient.

For example, the update of the weight parameter of the actor network meets the following formula:

$$\nabla_\phi J \approx \frac{1}{N_{batch}} \sum_{n=1}^{N_{batch}} \nabla_a Q(S, a, \theta)\Big|_{S=S_t^n, a=\mu(S_t^n, \phi)} \nabla_\phi \mu(S, \phi)\Big|_{S=S_t^n}$$

S18: Update the weight parameter of the target critic network and the weight parameter of the target actor network.

For example, an updated weight parameter of the target critic network may meet the following formula:

$$\theta^{-*} = \tau\theta + \left(1 - \tau\right)\theta^-$$

For example, an updated weight parameter of the target actor network may meet the following formula:

$$\phi^{-*} = \tau\phi + \left(1 - \tau\right)\phi^-$$

Step S14 to step S18 are repeatedly performed for M times, to complete a training process of one episode.

In the solution in this embodiment of this application, the weight parameter of the agent model is updated in the first update mode, so that learning efficiency of the agent model can be improved, thereby implementing energy consumption optimization as soon as possible. For example, at an initial stage of deploying the terminal device in the current working environment, the weight parameter of the agent model may be updated for a plurality of times at a time, to improve learning efficiency of the agent model, thereby implementing energy consumption optimization as soon as possible. In addition, at the initial stage of deploying the terminal device in the current working environment, more cloud training data of another device may be depended on, that is, a proportion of training data, of the another device, used for each time of training is increased. This helps enable the agent model to quickly learn, to improve effect of energy consumption optimization.

In the second update mode, the currently used agent model outputs the control action based on an observed state, and the weight parameter of the currently used agent model is updated once, to obtain an updated agent model. That is, the weight parameter is updated once in each step.

Quantities of pieces of training data used for all times of update may be the same or may be different. For example, before each time of update, the policy update module 214 obtains the $N_{batch}$ pieces of training data.

For example, for a manner of obtaining the $N_{batch}$ pieces of training data used in each time of update, refer to the foregoing descriptions. For example, before each time of update, the policy update module 214 randomly samples the $N_{batch}$ pieces of training data from the storage module, and then performs training in view of this.

For a specific process of each time of update, refer to the foregoing DDPG algorithm, or another update manner may be used. This is not limited in this embodiment of this application.

For example, in the trickle update mode, the reinforcement learning model may interact with the system by using a random policy to generate a specific amount of data to warm up a neural network. Then, the algorithm continuously interacts with the terminal device #A and stores data in a data storage module. In each step of the algorithm, $N_{batch}$ pieces of data are randomly sampled from the data storage module, and a weight of the actor network and a weight of the critic network are updated by using the DDPG algorithm.

An example of an update procedure in the trickle update mode is shown below.

The update procedure includes three phases: an initialization phase, a pre-training phase, and a training phase.

In the initialization phase, the following operations may be performed:

using a parameter $\theta$ and a parameter $\phi$ to randomly initialize the critic network and the actor network, respectively;

using a parameter $\theta^-$ and a parameter $\phi^-$ to initialize the target critic network and the target actor network, respectively, where in an initialization process, the parameter $\theta^-$ may be the parameter $\theta$, and the parameter $\phi^-$ may be the parameter $\phi$;

initializing the replay buffer;

initializing a Gaussian distribution $N(0,\sigma)$ as exploration noise of the terminal device #A; and

initializing a quantity P of maximum episodes (episodes), where P is a positive integer.

In the pre-training phase, between a first moment and a $T_{initial}$th moment when pre-training starts, interaction is performed with the terminal device #A by using a random policy to obtain a specific amount of training data to warm up (warm up) the critic network and the actor network, and the collected training data is stored in the replay buffer.

In the training phase, the weight parameter of the agent model is updated once in each step.

The training phase may include the following steps.

S11: Initialize the state space S of the terminal device #A.

S12: Determine the control action based on the current actor network and the exploration noise.

For example, the control action may meet the following formula:

$$a_t = \mu(s_t,\phi) + N_t$$

$N_t$ may represent exploration noise corresponding to a $t$th moment.

The terminal device #A adjusts an operating parameter based on the control action $a_t$, the observation module obtains a new state $S_{t+1}$, and the reward signal calculation module calculates a corresponding reward signal $R_t$.

S13: Store $(S_t, a_t, R_t, S_{t+1})$ in the replay buffer.

S14: Obtain the $N_{batch}$ pieces of training data from the replay buffer.

S15: Calculate a target value.

For example, the target value may meet the following formula:

$$y_n = R_t^n + \gamma Q'\left(S_{t+1}^n, \mu'\left(S_{t+1}^n, \phi^-\right), \theta^-\right)$$

S16: Update the weight parameter of the critic network by minimizing the value of the loss function.

For example, the loss function meets the following formula:

$$L(\theta) = \frac{1}{N_{batch}} \sum_{n=1}^{N_{batch}} \left(y_n - Q(S_t^n, a_t^n, \theta)\right)^2$$

S17: Update the weight parameter of the actor network by using a deterministic policy gradient.

For example, the update of the weight parameter of the actor network meets the following formula:

$$\nabla_\phi J \approx \frac{1}{N_{batch}} \sum_{n=1}^{N_{batch}} \nabla_a Q(S,a,\theta)\Big|_{S=S_t^n, a=\mu(S_t^n,\phi)} \nabla_\phi \mu(S,\phi)\Big|_{S=S_t^n}$$

S18: Update the weight parameter of the target critic network and the weight parameter of the target actor network.

For example, an updated weight parameter of the target critic network may meet the following formula:

$$\theta^* = \tau\theta + \left(1-\tau\right)\theta^-$$

For example, an updated weight parameter of the target actor network may meet the following formula:

$$\phi^{-*} = \tau\phi + \left(1-\tau\right)\phi^{-}$$

Step S12 to step S18 are repeatedly performed. In the training process, if the state of the terminal device #A reaches a preset final state or the target is achieved, the state space S of the terminal device #A is initialized.

In the solution in this embodiment of this application, the weight parameter of the agent model is updated in the second update mode, to steadily learn the control policy that adapts to the local working environment and the user habit. This ensures learning stability, and helps improve effect of energy consumption optimization in the local environment. For example, in a stable phase in which the terminal device is deployed in the current working environment, the weight parameter of the agent model may be updated once in each interaction process with the terminal device, to steadily learn the control policy that adapts to the local working environment and the user habit. This improves effect of energy consumption optimization. In addition, in the stable phase in which the terminal device is deployed in the current working environment, more local training data may be depended on, that is, a proportion of training data, of the local device, used for each time of training is increased. This helps enable the agent model to quickly adapt to the control policy of the local working environment, and improves effect of energy consumption optimization.

It should be understood that the foregoing is merely an example, and the update procedure of the policy update module 214 may be triggered in another manner.

For example, the update procedure of the policy update module 214 may be triggered by a user operation, that is, the user sets an update time of the weight parameter of the agent model.

For example, the policy update module 214 may periodically update the weight parameter of the agent model.

For example, in the working process of the terminal device #A, $T_{\text{train}}$ is an update periodicity, that is, $N_{\text{train}}$ times of update are performed at an interval of $T_{\text{train}}$, where $N_{\text{train}}$ is a positive integer, and $T_{\text{train}}$ is greater than 0.

Optionally, when the control system 200 includes the data processing module 220, the data processing module 220 may receive, store, and manage training parameters, of agent models, sent by control apparatuses corresponding to the terminal devices.

For example, the policy update module 214 may upload the training parameters of the agent models.

The training parameter of the agent model is a parameter that needs to be used in a training process of the agent model, and the parameter remains unchanged in the training process of the agent model.

For example, the training parameter of the agent model may include at least one of the following: a general training parameter of a reinforcement learning model or a specific training parameter of a specific reinforcement learning model. For example, the general training parameter of the reinforcement learning model may include one or more of a learning rate, an exploration noise temperature factor, or the like of each component.

For example, the training parameter of the agent model may include at least one of the following: a learning rate, exploration noise, $T_{\text{train}}$, $N_{\text{train}}$, $N_{\text{batch}}$, $\tau$, $\gamma$, a related parameter of the loss function, a gradient update manner, or the like.

Optionally, when the control system 200 includes the data processing module 220, the data processing module 220 may send the training parameter of the agent model to the control apparatus 210. That is, the policy update module 214 may download the training parameter of the agent model.

In other words, the policy update module 214 may adjust the training process based on the training parameter obtained from the cloud.

For example, the cloud may determine, based on similarities between environments in which source devices corresponding to a plurality of groups of training parameters stored on the cloud are located and an environment in which the terminal device #A is located, the training parameter sent to the control apparatus 210.

For example, the cloud may send, to the control apparatus 210, a training parameter that is in the plurality of groups of training parameters and that corresponds to a source device that has a highest similarity to the environment in which the terminal device #A is located.

For a similarity between environments in which two devices are located, refer to the foregoing descriptions. Details are not described herein again.

As described above, in the system 200, information sharing may be implemented between the cloud and the terminal device, or information sharing may be implemented between a plurality of terminal devices through the cloud. The system 200 is an energy consumption optimization system based on an information sharing mechanism. The system 200 may include the data processing module 220 based on a local-cloud communication architecture. The data processing module 220 exchanges information with the local device, so that information sharing and collaborative processing can be implemented. For example, the information exchanged between the data processing module 220 and the edge environment may include: interaction data, environment data, a parameter of a reward function, a parameter of an agent model, a training parameter of the agent model, and the like. An air conditioner is used as an example. The system has a strong generalization capability, which is helpful to cope with problems such as a wide application scope of the air conditioner, diverse operating climates, user habits, and a large difference of house types.

The system in this embodiment of this application can implement sharing of training data of reinforcement learning in a plurality of scenarios and a plurality of users in a spatial-temporal dimension, thereby implementing collaborative learning based on interaction data of a local-remote air conditioner environment. This helps fully mine a value of large-scale interaction data, improve training effect of the model, and effectively improve a generalization capability of the model.

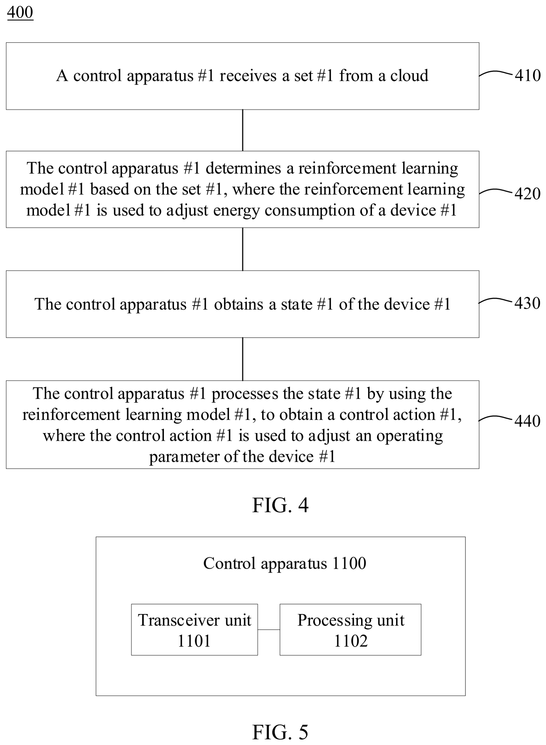

FIG. 4 is a schematic flowchart of a device control method according to an embodiment of this application. The following describes the solutions in embodiments of this application with reference to FIG. 4. The method 400 shown in FIG. 4 may be performed by the control system 200 shown in FIG. 2 or FIG. 3. For specific descriptions in the method 400, refer to related descriptions in the control system 200. To avoid repetition, some descriptions are appropriately omitted when the method 400 is described.

As shown in FIG. 4, the method 400 includes the following steps.

410: A control apparatus #1 receives a set #1 (an example of a first set) from a cloud.

420: The control apparatus #1 determines a reinforcement learning model #1 (an example of a first reinforcement learning model) based on the set #1, where the reinforcement learning model #1 is used to adjust energy consumption of a device #1 (an example of a first device).

430: The control apparatus #1 obtains a state #1 (an example of a first state) of the device #1.

440: The control apparatus #1 processes the state #1 by using the reinforcement learning model #1, to obtain a control action #1 (an example of a first control action), where the control action #1 is used to adjust an operating parameter of the device #1.

The cloud may separately send sets to a plurality of control apparatuses. The plurality of control apparatuses respectively correspond to different devices. The control apparatus #1 corresponds to the device #1. The control apparatus #1 may be any one of the plurality of control apparatuses.

For different control apparatuses, the cloud may send a same set, or may send different sets. For ease of description, in the method 400, only the control apparatus #1 and the device #1 are used as an example for description. For another control apparatus and another device, refer to descriptions of the control apparatus #1 and the device #1.

The device #1 may also be referred to as a target device.

For example, the device #1 may be the terminal device #A shown in FIG. 2 or FIG. 3. The control apparatus #1 may be the control apparatus 210 shown in FIG. 2 or FIG. 3.

The control apparatus #1 may be another device that is not the device #1 or a module in the another device deployed in an edge environment together with the device #1.

For example, the device #1 may be an air conditioner. The control apparatus #1 may be the air conditioner or a control module in the air conditioner. Alternatively, the control apparatus #1 may be the another device, for example, a mobile phone or a tablet computer.

It should be understood that this is merely an example, and the device #1 may be another device that requires energy consumption optimization. For ease of description, in this embodiment of this application, the air conditioner is mainly used as an example for description.

Alternatively, the control apparatus #1 may be the device #1 or a module in the device #1.

For ease of description, in the method 400, an example in which the control apparatus #1 is the device #1 is mainly used for description, and this does not constitute a limitation on the solutions in embodiments of this application.

For example, step 420 may include: updating a reinforcement learning model #2 (the first device) to the reinforcement learning model #1 based on the set #1.

Before the cloud sends the set #1 to the control apparatus #1, a reinforcement learning model originally deployed in the control apparatus #1 may be the reinforcement learning model #2. In this case, the control apparatus #1 may update the reinforcement learning model #2 to the reinforcement learning model #1 based on the set #1.

Alternatively, the control model originally deployed in the control apparatus #1 may be another model that is not the reinforcement learning model. In this case, step 420 may include: replacing the original control model with the reinforcement learning model #1.

For example, the set #1 sent to the control apparatus #1 is related to a device #2.

For example, the device #1 and the device #2 may be devices of a same type. For example, both the device #1 and the device #2 may be air conditioners.

The set #1 is related to the device #2, and may be that a part of or all elements in the set #1 are determined based on data from the device #2.

That the set #1 is related to the device #2 may be understood in the following manner: The set #1 may be related to a plurality of devices, and the plurality of devices include the device #2. The plurality of devices may include the device #1, or may not include the device #1.

A task of the reinforcement learning model #1 is to adjust energy consumption of the device #1.

An agent model in the reinforcement learning model #1 is an agent model #1 (an example of a first agent model). Step 440 may include: processing the state #1 by using the agent model #1, to obtain the control action #1.

For related descriptions of the reinforcement learning model #1 and the agent model #1, refer to descriptions of the reinforcement learning model and the agent model in the system 200. To avoid repetition, details are not described herein again.

For example, the state #1 of the device #1 may be a current state of the device #1. To be specific, the current state of the device #1 is input to the agent model #1 for processing, and the agent model #1 selects a control action, namely, the control action #1, in the current state.

The state #1 may be any state input to the reinforcement learning model #1. The control action #1 is a control action, in the state #1, determined by the reinforcement learning model #1. For specific descriptions of the state #1, refer to a state of a terminal device #1. For specific descriptions of the control action #1, refer to a control action of the terminal device #1.

In an example, the state #1 of the device #1 may be obtained by performing data preprocessing on a raw state #1 of the device #1.

The raw state #1 of the device #1 may be read from the device #1.

For example, the state #1 of the device #1 may be obtained by performing normalization preprocessing on the raw state #1 of the device #1.

Data that meets a calculation requirement of a control framework may be obtained by performing data preprocessing on the read raw state.

For example, step 430 may be performed by the observation module 211. The observation module 211 may read a real-time raw state (for example, the raw state #1) from the device #1, and perform data preprocessing on the raw state #1, to obtain the state #1.

For example, the observation module 211 may read data (the raw state) from the device #1 in real time by using $\Delta t$ as a sampling interval, and perform data preprocessing, to obtain the state input to the agent model #1.

For a specific process of the data preprocessing, refer to related descriptions of the observation module 211. Details are not described herein again.

It should be understood that the foregoing is merely an example, and the raw state #1 may also be used as the state #1. To be specific, data preprocessing is not performed on the raw state #1, and the raw state #1 read from the device #1 is directly input to the agent model #1.

The state #1 may include one dimension, or may include a plurality of dimensions.

Optionally, the device #1 is an air conditioner, and a state #1 of the air conditioner may include at least one of the following: an outdoor temperature, an indoor temperature, indoor humidity, energy consumption of the air conditioner, an airflow of a fan of the air conditioner, a setting temperature of a direct evaporative cooler, a setting temperature of an indirect evaporative cooler, or a setting temperature of a cooling coil.

For example, state space of the device #1 may include all the foregoing dimensions. In this way, the state space of the device #1 not only includes the indoor temperature and the energy consumption of the air conditioner, but also includes information of another dimension, so that the agent model can select a control action based on more comprehensive information. This helps improve effect of energy consumption optimization.

It should be understood that the foregoing is merely an example. For different devices, dimensions of states of the devices may be adaptively set. For example, the device #1 may be a heater, and a state #1 of the heater may include an indoor temperature, energy consumption of the heater, or the like. For another example, the device #1 may be an air purifier, and a state #1 of the air purifier may include a clean air delivery rate, energy consumption of the air purifier, or the like. This is not limited in this embodiment of this application.

For example, step 440 may be performed by the decision module 212. The agent model #1 may be deployed in the decision module 212. In this case, the control action #1 is determined by the decision module 212.

The control action #1 may include one dimension, or may include a plurality of dimensions.

Optionally, the device #1 is an air conditioner, and the control action #1 may include at least one of the following: a rotational speed setting command signal of a compressor, a temperature setting command signal of a direct evaporative cooler, a temperature setting command signal of an indirect evaporative cooler, a temperature setting command signal of a cooling coil, an indoor-fan airflow setting command signal, or an outdoor-fan airflow setting signal.

For example, action space of the device #1 may include all the following dimensions. This helps control the air conditioner in a plurality of manners, and helps improve effect of energy consumption optimization.

It should be understood that the foregoing is merely an example. For different devices, dimensions of control actions of the devices may be adaptively set. For example, the device #1 may be a heater, and a control action #1 of the heater may include a temperature setting command signal or the like. For another example, the device #1 may be an air purifier, and a control action #1 of the air purifier may include an air speed setting command of the air purifier or the like. This is not limited in this embodiment of this application.

The control action #1 may be fed back to an execution module in the device #1. The execution module may determine a first control quantity of the device #1 based on the control action #1, to adjust the operating parameter of the device #1. The first control quantity may be the same as the control action #1. Alternatively, there is a mapping relationship between the control quantity and the control action. An execution apparatus may determine, based on the mapping relationship and the control action #1, a control quantity, namely, the first control quantity, corresponding to the control action #1.

For example, the agent model #1 may include an actor network and a critic network.

Specific structure attributes of the actor network and the critic network may be set as required.

For specific descriptions of the actor network and the critic network, refer to related descriptions of the decision module 212 in the system 200. Details are not described herein again.

It should be understood that this is merely an example, and the agent model #1 may alternatively use another neural network or another model that is not the neural network. This is not limited in this embodiment of this application.

In the method 400, the cloud may interact with a plurality of devices to implement information sharing between the plurality of devices.

In the solution in this embodiment of this application, a reinforcement learning model used by a local device (the device #1) is determined by using the set of the cloud. Data of the cloud is global data. In the solution in this embodiment of this application, a data utilization dimension may be extended from a local dimension to a global dimension, thereby effectively improving global data utilization efficiency. This helps improve a generalization capability of the model, to adapt to different environments, and helps ensure effect of energy consumption optimization in various working environments. In addition, in the solution in this embodiment of this application, the reinforcement learning model is used to implement device control, thereby reducing dependence of the control method on human prior knowledge, and reducing costs. The reinforcement learning model may gradually learn a policy through interaction in a working process of the device. For example, determining the first reinforcement learning model based on the set #1 may be: performing training based on the set #1 to obtain the first reinforcement learning model. In the working process of the device, the reinforcement learning model may perform autonomous learning, and update the weight parameter of the model, to continuously improve a control capability adaptively, thereby improving effect of energy consumption optimization of the device, that is, improving control performance of the model. An air conditioner is used as an example. The model in the solution in this embodiment of this application has a strong generalization capability, which is helpful to resolve problems such as a wide application scope of the air conditioner, diverse operating climates, user habits, and a large difference of house types.

Optionally, the method 400 may further include step 450 (not shown in the figure).

450: Obtain a state #2 (an example of a second state) obtained after the control action #1 is performed, and calculate, based on the state #2, a value #1 of a reward function #1 (an example of a first reward function) in the reinforcement learning model #1.

The value #1 of the reward function #1 is a reward signal #1 (an example of a first reward signal) corresponding to the control action #1.

For a method for calculating the reward signal, refer to the foregoing descriptions. Details are not described herein again.

The state #2 after the control action #1 is performed is a state #2 observed after the control action #1 is performed on the device #1. As described above, after the control action #1 is fed back to the device #1, the operating parameter of the device #1 is correspondingly adjusted, and the state, namely, the state #2, of the device #1 is obtained after the adjustment.

For example, the state #2 may be obtained by the observation module 211.

For example, the observation module 211 may read data from the device #1 in real time by using $\Delta t$ as a sampling interval, and a distance between a sampling moment corresponding to the state #2 and a sampling moment corresponding to the state #1 is $\Delta t$.

Further, the method 400 may further include step 460 (not shown in the figure).

460: The control apparatus #1 sends a set #2 (an example of a second set) to the cloud.

The set #2 may include at least one of the following: interaction data #1 (an example of first interaction data), a parameter of the reinforcement learning model #1, or a training parameter of the reinforcement learning model #1. The interaction data #1 may include the state #1, the control action #1, the reward signal #1 corresponding to the control action #1, and the state #2.

After completing update of the reinforcement learning model #1, the control apparatus #1 may send the parameter, the training parameter, the interaction data, or the like of the reinforcement learning model #1 to the cloud, to enrich a database of the cloud.

In the working process of the device #1, the reinforcement learning model #1 may continuously interact with the device #1. To be specific, step 430 to step 450 are repeatedly performed, and the state #2 obtained in step 450 is used as the state #1 in step 430 performed next time.

Optionally, before the set #1 from the cloud is received, the method 400 may further include step 470 (not shown in the figure).

470: The control apparatus #1 sends environment information or an environment feature of the device #1 to the cloud, where the environment information or the environment feature is used to determine the set #1, and the environment feature is obtained by performing feature extraction on the environment information.

For example, the device #1 is an air conditioner. The environment information may include at least one of the following: a geographical location, a seasonal temperature feature, a working time period, an energy consumption requirement, a common temperature setting, or the like.

It should be understood that the foregoing is merely an example, and the environment information may further include other information related to working of the air conditioner, for example, an indoor area or a quantity of indoor people.

For a specific manner of determining the set #1 by using the environment information or the environment feature, refer to the following examples. Details are not described herein again.

Optionally, the set #1 includes at least one of the following: a plurality of pieces of training data, the training parameter of the reinforcement learning model #1, or the parameter of the reinforcement learning model #1.

For specific descriptions of the set #1, refer to the following examples. Details are not described herein.

The following describes the set #1 from the cloud by using an example with reference to Example 1 and Example 2.

Example 1

In a possible implementation, the set #1 may include the plurality of pieces of training data. Training data #1 (an example of first training data) in the plurality of pieces of training data may include a sample state #1 (an example of a first sample state), a sample control action #1 (an example of a first sample control action) in the sample state #1, a sample reward signal #1 (an example of a first sample reward signal) corresponding to the sample control action #1, and a sample state #2 (an example of a second sample state) after the sample control action #1 is performed.

In Example 1, that the set #1 is related to the device #2 means that a part of or all training data in the set #1 is from the device #2, or a part of or all training data in the set #1 is determined based on interaction data of the device #2.

For example, the training data #1 may be a group of interaction data of the device #2. That is, a reinforcement learning model is deployed in a control apparatus corresponding to the device #2. The sample control action #1 is a control action selected by the reinforcement learning model based on the sample state #1. The sample state #2 is a state observed after the sample control action #1 is performed on the device #2. The sample reward signal #1 is a value, of a reward function, determined based on the sample state #2.

The control apparatus #2 may be another device that is not the device #2 or a module in the another device deployed in an edge environment together with the device #2. Alternatively, the control apparatus #2 may be the device #2 or a module in the device #2. For specific descriptions, refer to the device #1 and the control apparatus #1. Details are not described herein again. For different edge environments, whether a device and a control apparatus corresponding to the device are mutually independent devices does not affect the solutions in embodiments of this application. For example, the control apparatus #1 may be the device #1, and the control apparatus #2 may be another device that is not the device #2 and that is deployed in a same edge environment as the device #2.

For ease of description, in the method 400, only an example in which a control apparatus corresponding to each device is the device itself is used for description.

In the solution in Example 1, each device may send respective interaction data to the cloud, and the cloud may send the interaction data to a required device as training data. In step 460, the interaction data sent by the device #1 to the cloud may also be subsequently sent to the device #1 or another device as the training data.

The training data #1 is any one of at least one piece of training data. A data format of other training data is the same as that of the training data #1. In other words, each of the at least one piece of training data includes at least the foregoing four elements: a state at a specific moment, a control action in the sample state, a reward signal corresponding to the control action, and a state at a next moment after the control action is performed.

For specific descriptions of the training data, refer to related descriptions in the system 200. Details are not described herein again.

In Example 1, step 420 may include: performing training based on $N_{batch}$ pieces of training data, to obtain the agent model #1, where the agent model #1 belongs to the reinforcement learning model #1, and the $N_{batch}$ pieces of training data include a part of or all the plurality of pieces of training data in the set #1.

Alternatively, step 420 may be understood as: updating a weight parameter of an agent model #2 (an example of a second agent model) based on the $N_{batch}$ pieces of training data, to obtain the agent model #1. The agent model #2 belongs to the reinforcement learning model #2.

In this case, the agent model #1 and the agent model #2 have a same model structure, and a difference between the agent model #1 and the agent model #2 is that weight parameters are different.

For example, step 420 may be performed by the policy update module 214.

It should be noted that in the working process of the device #1, step 420 may be repeatedly performed. To be specific, in the working process of the device #1, the weight parameter of the reinforcement learning model may be continuously updated. Quantities of pieces of training data used for all times of training may be the same or may be different. This is not limited in this embodiment of this application.

For a specific training process, refer to related descriptions of the policy update module 214 in the system 200.

Details are not described herein again.

Further, a part of the $N_{batch}$ pieces of training data are determined based on the interaction data of the device #1.

In this way, the $N_{batch}$ pieces of training data include data from the device #1, and may also include data from another device.

In the solution in this embodiment of this application, a local agent model may be trained by using interaction data of another device of the cloud. This helps make full use of the training data of the cloud, break through an efficiency bottleneck of only a single reinforcement learning model in terms of sampling, implement collaborative learning of local and remote data, improve a generalization capability of the reinforcement learning model, and improve effect of energy consumption optimization.

In addition, in the solution in this embodiment of this application, the local agent model may be trained jointly by using data from the another device of the cloud and local data, so that a feature of a heterogeneous working environment is integrated and a characteristic of a local environment is considered. This helps improve a generalization capability of the agent model while adapting to a local working environment, and further improves effect of energy consumption optimization.

In a possible implementation, the $N_{batch}$ pieces of training data are the plurality of pieces of training data in the set #1. In this case, step 420 may include: performing training based on the plurality of pieces of training data, to obtain the agent model #1. The following uses this as an example to describe the $N_{batch}$ pieces of training data.

Optionally, the plurality of pieces of training data are determined based on similarities between environments in which source devices corresponding to the plurality of pieces of training data are located and an environment in which the device #1 is located.

A source device corresponding to one piece of training data may be a device that sends the training data. For example, the training data #1 in the plurality of pieces of training data is interaction data of the device #2, and the device #2 is a source device corresponding to the training data #1. The plurality of pieces of training data may be from one or more source devices. The device #1 is a target device corresponding to the plurality of pieces of training data. For example, for different target devices, the cloud may send different training data.

Optionally, a similarity between an environment in which a source device is located and the environment of the device #1 is determined based on a similarity between an environment feature of the source device and an environment feature of the device #1. The environment feature of the source device may be obtained by performing feature extraction on the environment information of the source device. The environment feature of the device #1 may be obtained by performing feature extraction on the environment information of the device #1.

Each device may send respective environment information or a respective environment feature to the cloud.

For example, each device may send respective environment information to the cloud, and a data processing module of the cloud performs feature extraction on the environment information.

For another example, each device may perform feature extraction on respective environment information, to obtain an environment feature of the device, and then send the environment feature to the cloud.

For a specific manner of the feature extraction, refer to related descriptions in the system 200. Details are not described herein again.

For example, a similarity between an environment in which a source device is located and the environment of the device #1 may be a similarity between an environment feature of the source device and an environment feature of the device #1. In this case, the plurality of pieces of training data are determined based on similarities between environment features of source devices corresponding to the plurality of pieces of training data and an environment feature of the device #1.

Further, the plurality of pieces of training data are obtained by performing random sampling in the training data set based on a similarity between an environment in which a source device corresponding to training data in the training data set of the cloud is located and the environment in which the device #1 is located.

The plurality of pieces of training data belong to the training data set of the cloud. In the training data set, a higher similarity between an environment in which a source device corresponding to one piece of training data is located and the environment in which the device #1 is located indicates a higher probability that the training data is sampled to the plurality of pieces of training data.

Optionally, the plurality of pieces of training data are obtained by performing random sampling in the training data set based on a similarity between an environment feature of a source device corresponding to training data in the training data set of the cloud and the environment feature of the device #1.

The foregoing process is an importance sampling process. For specific descriptions, refer to the importance sampling process in the system 200.

Alternatively, a similarity between an environment in which a source device is located and the environment of the device #1 may be determined based on a similarity between environment information of the source device and the environment information of the device #1.

In other words, feature extraction may not be performed on the environment information, and a similarity between environments in which two devices are located is determined based on a similarity between environment information of the two devices.

In the solution in this embodiment of this application, training data used for training an agent model on the device #1 is determined based on the similarity between the environment in which the source device is located and the environment in which the device #1 is located. This helps make working environments of the source devices corresponding to the plurality of pieces of training data similar to or the same as the working environment of the device #1 as much as possible, so that a control policy obtained through learning by the agent model adapts to the local working environment, thereby improving effect of energy consumption optimization of a terminal device. In addition, training data of the another device may be further used to improve a generalization capability of the control policy.

It should be understood that the foregoing is merely an example. For another example of the $N_{batch}$ pieces of training data, refer to descriptions in the foregoing system 200. Details are not described herein again.

Example 2

In a possible implementation, the set #1 may include at least one of the following: the parameter of the reinforcement learning model #1 or the training parameter of the reinforcement learning model #1.

The parameter of the reinforcement learning model #1 may include at least one of the following: a parameter of the agent model #1 in the reinforcement learning model #1 or a parameter of the reward function #1 in the reinforcement learning model #1.

For an example of the parameter, refer to related descriptions in the foregoing system 200. Details are not described herein again.

The solution in this embodiment of this application can support a plurality of reinforcement learning models. This helps make full use of advantages of different models in different scenarios, and improves a generalization capability.

The parameter of the agent model #1 may include a structure parameter of the agent model #1 and/or a weight parameter of the agent model #1.

For example, the set #1 may include the weight parameter of the agent model #1. In this case, the device #1 may update a weight parameter of the agent model #2 based on the weight parameter, to obtain the agent model #1. The decision module 212 is used as an example. The decision module 212 may download the weight parameter of the agent model #1 from the cloud, and update a local agent model #2 to the agent model #1 based on the weight parameter.

For example, the weight parameter of the agent model #1 may be determined based on a similarity between an environment corresponding to the agent model #1 and an environment in which the device #1 is located.

The cloud may receive and store a weight parameter from an agent model currently deployed in each device.

For example, before the cloud sends the set #1 to the device #1, an agent model deployed in the control apparatus #1 is the agent model #2. The control apparatus #1 may send the weight parameter of the agent model #2 to the cloud.

For example, after the agent model is updated, the control apparatus #1 may send the weight parameter of the agent model #1 to the cloud.

The cloud may select the weight parameter of the agent model #1 from weight parameters of a plurality of agent models based on similarities between environments in which source devices corresponding to the weight parameters, of the plurality of agent models, stored on the cloud and the environment in which the device #1 is located.

For example, a similarity between an environment in which a source device corresponding to the agent model #1 is located and the environment in which the device #1 is located is higher than a similarity between an environment in which a source device corresponding to another agent model is located and the environment in which the device #1 is located.

For a manner of determining a similarity between environments in which two devices are located, refer to the foregoing descriptions. Details are not described herein again.

In the solution in this embodiment of this application, the cloud may send the weight parameter of the agent model to the device, so that the local device can directly adjust the operating parameter based on the agent model. This helps the model be capable of quickly implementing energy consumption optimization. For example, at an initial stage of deploying the device to a new working environment, the agent model deployed in the device may not adapt to a current working environment. In this case, the cloud may send a weight parameter of an agent model in a similar environment based on an environment similarity, so that a model on a target device can improve control performance as soon as possible, thereby implementing energy consumption optimization.

For example, the set #1 may include the structure parameter of the agent model #1 and the weight parameter of the agent model #1.

For example, before the cloud sends the set #1 to the device #1, the agent model deployed in the control apparatus #1 is the agent model #2. A structure of the agent model #1 is different from a structure of the agent model #2. In this case, the device #1 replaces the agent model #2 with the agent model #1. The decision module 212 is used as an example. The decision module 212 may download the weight parameter and the structure parameter of the agent model #1 from the cloud, and replace a local agent model #2 with the agent model #1 based on the weight parameter and the structure parameter.

For example, the weight parameter and the structure parameter of the agent model #1 may be determined based on a similarity between an environment corresponding to the agent model #1 and an environment in which the device #1 is located.

The cloud may receive and store a weight parameter and a structure parameter of an agent model currently deployed in each device.

For example, before the cloud sends the set #1 to the device #1, the agent model deployed in the control apparatus #1 is the agent model #2. The control apparatus #1 may send the weight parameter and the structure parameter of the agent model #2 to the cloud.

For a manner of determining the structure parameter and the weight parameter of the agent model #1, refer to the foregoing descriptions of determining the weight parameter of the agent model #1 based on the environment similarity. Details are not described herein again.

In the solution in this embodiment of this application, the cloud may send the weight parameter and the structure parameter of the agent model to the device, so that the local device can directly adjust the operating parameter based on the agent model. This helps the model be capable of quickly implementing energy consumption optimization. For example, at an initial stage of deploying the device to a new working environment, the agent model deployed in the device may not adapt to a current working environment. In this case, the cloud may send a weight parameter and a structure parameter of an agent model in a similar environment based on an environment similarity, so that a model on a target device can improve control performance as soon as possible, thereby implementing energy consumption optimization.

For example, the set #1 may include the structure parameter of the agent model #1.

For example, the decision module 212 may download the structure parameter of the agent model #1 from the cloud. The policy update module 214 may initialize the weight parameter based on the structure parameter of the agent model #1, and then perform training based on the $N_{batch}$ pieces of training data, to obtain the agent model #1. The $N_{batch}$ pieces of training data may be local training data of the device #1. Alternatively, for the $N_{batch}$ pieces of training data, refer to the obtaining manner in Example 1. In this case, the set #1 further includes the plurality of pieces of training data.

For a manner of determining the structure parameter of the agent model #1, refer to the foregoing descriptions of determining the weight parameter of the agent model #1 based on the environment similarity. Details are not described herein again.

For example, the set #1 may include a structure parameter of an agent model #3 and a weight parameter of the agent model #3.

In this case, the structure parameter of the agent model #3 is the structure parameter of the agent model #1. For example, before the cloud sends the set #1 to the control apparatus #1, an agent model deployed in the control apparatus #1 is the agent model #2, so that the policy update module 214 determines the agent model #3 based on the set #1, and can perform training based on the $N_{batch}$ pieces of training data, to obtain the agent model #1. The $N_{batch}$ pieces of training data may be local training data of the device #1. Alternatively, for the $N_{batch}$ pieces of training data, refer to the obtaining manner in Example 1. In this case, the set #1 further includes the plurality of pieces of training data. The training process is a transfer training process.

For a manner of determining the structure parameter of the agent model #3 and the weight parameter of the agent model #3, refer to the foregoing descriptions of determining the weight parameter of the agent model #1 based on the environment similarity. Details are not described herein again.

In the solution in this embodiment of this application, the cloud may send the weight parameter and the structure parameter of the agent model to the device, to implement model transfer, so that the local device can perform transfer training based on the agent model. This helps improve model training efficiency, improve control performance as soon as possible, and implement energy consumption optimization. For example, at an initial stage of deploying the device to a new working environment, the agent model deployed in the device may not adapt to a current working environment. In this case, the cloud may send a weight parameter and a structure parameter of an agent model in a similar environment based on an environment similarity, so that the target device performs transfer training. This helps improve model training efficiency, improve control performance as soon as possible, and implement energy consumption optimization.

For example, the set #1 may include the weight parameter of the agent model #3.

For example, before the cloud sends the set #1, an agent model deployed in the device #1 is the agent model #2, and a structure of the agent model #3 is the structure of the agent model #2, so that the policy update module 214 can determine the weight parameter of the agent model #3 based on the set #1, and train the agent model #3 based on the $N_{batch}$ pieces of training data, to obtain the agent model #1. The $N_{batch}$ pieces of training data may be local training data of the device #1. Alternatively, for the $N_{batch}$ pieces of training data, refer to the obtaining manner in Example 1. In this case, the set #1 further includes the plurality of pieces of training data. The training process is a transfer training process.

For a manner of determining the weight parameter of the agent model #3, refer to the foregoing descriptions of determining the weight parameter of the agent model #1 based on the environment similarity. Details are not described herein again.

In the solution in this embodiment of this application, the cloud may send the weight parameter of the agent model to the device, to implement model transfer, so that the local device can perform transfer training based on the agent model. This helps improve model training efficiency, improve control performance as soon as possible, and implement energy consumption optimization. For example, at an initial stage of deploying the device to a new working environment, the agent model deployed in the device may not adapt to a current working environment. In this case, the cloud may send a weight parameter of an agent model in a similar environment based on an environment similarity, so that the target device performs transfer training. This helps improve model training efficiency, improve control performance as soon as possible, and implement energy consumption optimization.

For example, the set #1 may include the training parameter of the reinforcement learning model #1.

In this case, the policy update module 214 may determine the training parameter based on the set #1, and then perform training based on the training parameter and the $N_{batch}$ pieces of training data, to obtain the agent model #1. The $N_{batch}$ pieces of training data may be local training data of the device #1. Alternatively, for the $N_{batch}$ pieces of training data, refer to the obtaining manner in Example 1. In this case, the set #1 further includes the plurality of pieces of training data.

For example, for a manner of determining the training parameter of the reinforcement learning model #1, refer to the foregoing descriptions of determining the weight parameter of the agent model #1 based on the environment similarity. Details are not described herein again.

The solution may be used in combination with the foregoing solutions. The set #1 includes the training parameter of reinforcement learning #1.

For example, the set #1 may include the parameter of the reward function #1.

The parameter of the reward function #1 may include a structure parameter and/or a weight parameter of the reward function.

The reward signal calculation module 213 is used as an example. For example, the reward signal calculation module 213 may download the parameter of the reward function #1 from the cloud, to update a currently deployed reward function.

In this way, the reward function used in step 450 is the updated reward function.

In the solution in this embodiment of this application, update of the reward function and update of the agent model are relatively independent.

For example, in step 420, updating the reinforcement learning model #2 to the reinforcement learning model #1 may include: updating the agent model #2 to the agent model #1. In this case, the agent model #2 is different from the agent model #1. The reward function may remain unchanged, to be specific, a reward function #2 in the reinforcement learning model #2 may be the same as the reward function #1 in the reinforcement learning model #1.

For example, in step 420, updating the reinforcement learning model #2 to the reinforcement learning model #1 may include: updating the reward function #2 to the reward function #1. In this case, the reward function #2 is different from the reward function #1. The agent model may remain unchanged, to be specific, the agent model #2 in the reinforcement learning model #2 may be the same as the agent model #1 in the reinforcement learning model #1.

Alternatively, in step 420, both the agent model and the reward function may be updated.

For example, for the parameter of the reward function #1, refer to the foregoing descriptions of determining the weight parameter of the agent model #1 based on the environment similarity. Details are not described herein again. Alternatively, the parameter of the reward function #1 may be determined in another manner. For example, the parameter of the reward function #1 is determined based on a target task of the reinforcement learning model.

In this embodiment of this application, in a working process of the local device, the reward function may be adjusted based on the data sent by the cloud. For example, the reward function is adjusted based on different task requirements or different working environment requirements. In this way, a manner of calculating the reward signal in the training data may be adjusted, so that a required reinforcement learning model, for example, a reinforcement learning model that adapts to a target task or a target working environment, can be obtained through training in a subsequent training process, thereby improving control performance.

Optionally, step 420 may include: when the device #1 is in a scenario #1 (an example of a first scenario), updating the weight parameter of the agent model #2 based on the set #1 in a first update mode, to obtain the agent model #1; or when the device #1 is in a scenario #2 (an example of a second scenario), updating the weight parameter of the agent model #2 based on the set #1 in a second update mode, to obtain the agent model #1.

The scenario #1 is different from the scenario #2, and the first update mode is different from the second update mode.

In other words, in different scenarios, different update modes may be used to train the agent model #2.

A difference between the first update mode and the second update mode includes at least one of the following: a quantity of update times of the weight parameter of the agent model #2 or a start moment of the update.

For example, a quantity of update times of the weight parameter of the agent model #2 in the first update mode is greater than a quantity of update times of the weight parameter of the agent model #2 in the second update mode.

For example, in the first update mode, after the agent model #2 interacts with the device #1 for a plurality of times, the agent model #2 is updated. In the second update mode, in a process of one time of interaction between the agent model #2 and the device #1, the agent model #2 is updated, and an agent model that interacts with the device #1 next time is the agent model #1.

For example, in the scenario #1, after the agent model #2 is deployed for a period of time, the weight parameter of the agent model #2 is updated for a plurality of times at a time, to obtain the agent model #1. In the scenario #2, the model deployed in the device #1 is updated from an agent model #4 to the agent model #2, the agent model #2 outputs a control action, and the weight parameter of the agent model #2 is updated once, to obtain the agent model #1; and then the agent model #1 outputs a control action.

The first update mode and the second update mode are applicable to scenarios in which training is required in Example 1 and Example 2. For specific descriptions of the first update model and the second update mode, refer to related descriptions of the system 200. To avoid repetition, details are not described herein again.

For specific descriptions of the update mode, refer to related descriptions of the policy update module 214 in the foregoing system 200. Details are not described herein again.

In this way, the control model in this embodiment of this application has a strong generalization capability, thereby helping expand an application scope. Even if the working environment of the device changes, control effect can still be ensured, thereby helping ensure effect of energy consumption optimization.

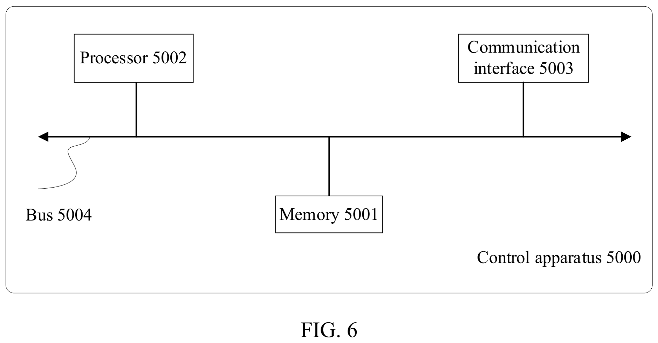

The following describes apparatuses in embodiments of this application with reference to FIG. 5 and FIG. 6. It should be understood that the apparatuses described below can perform the methods in the foregoing embodiments of this application. To avoid unnecessary repetition, repeated descriptions are appropriately omitted when the apparatuses in embodiments of this application are described below.

FIG. 5 is a block diagram of a structure of a device control apparatus according to an embodiment of this application. The control apparatus 210 shown in FIG. 2 may be considered as a specific implementation of the control apparatus 1100 shown in FIG. 5. The control apparatus 1100 shown in FIG. 5 includes a transceiver unit 1101 and a processing unit 1102. The control apparatus 1100 may be configured to perform the control method 400 shown in FIG. 4.

The transceiver unit 1101 is configured to receive a first set from a cloud, where the first set includes at least one of the following: a plurality of pieces of training data, a training parameter of a first reinforcement learning model, or a parameter of the first reinforcement learning model.

The processing unit 1102 is configured to:

update, based on the first set, a second reinforcement learning model deployed in a first device to the first reinforcement learning model, where the first reinforcement learning model is used to adjust energy consumption of the first device;

obtain a first state of the first device; and

process the first state by using the first reinforcement learning model, to obtain a first control action, where the first control action is used to adjust an operating parameter of the first device.

Optionally, the transceiver unit 1101 is further configured to send a second set to the cloud, where the second set includes at least one of the following: first interaction data, the training parameter of the first reinforcement learning model, or the parameter of the first reinforcement learning model, and the first interaction data includes: the first state, the first control action, a first reward signal corresponding to the first control action, and a second state obtained after the first control action is performed.

Optionally, first training data in the plurality of pieces of training data includes: a first sample state, a first sample control action in the first sample state, a first sample reward signal corresponding to the first sample control action, and a second sample state obtained after the first sample control action is performed.

Optionally, before receiving the first set from the cloud, the transceiver unit 1101 is further configured to send environment information of the first device to the cloud, where the environment information of the first device is used to determine the first set.

Optionally, the plurality of pieces of training data are determined based on similarities between environment features of source devices corresponding to the plurality of pieces of training data and an environment feature of the first device, the environment features of the source devices corresponding to the plurality of pieces of training data are obtained by performing feature extraction on environment information of the source devices corresponding to the plurality of pieces of training data, and the environment feature of the first device is obtained by performing feature extraction on the environment information of the first device.

Optionally, the plurality of pieces of training data are obtained by performing random sampling in a training data set based on a similarity between an environment feature of a source device corresponding to training data in the training data set of the cloud and the environment feature of the first device, and the environment feature of the source device corresponding to the training data in the training data set of the cloud is obtained by performing feature extraction on environment information of the source device corresponding to the training data in the training data set of the cloud.

Optionally, the parameter of the first reinforcement learning model includes at least one of the following: a parameter of a first agent model in the first reinforcement learning model or a parameter of a first reward function in the first reinforcement learning model.

Optionally, the processing unit 1102 is specifically configured to: when the first device is in a first scenario, update a weight parameter of a second agent model in the second reinforcement learning model in a first update mode based on the set, to obtain the first agent model in the first reinforcement learning model; or when the first device is in a second scenario, update a weight parameter of the second agent model in the second reinforcement learning model in a second update mode based on the set, to obtain the first agent model in the first reinforcement learning model, where the first scenario is different from the second scenario, and a difference between the first update mode and the second update mode includes at least one of the following: a quantity of update times of the weight parameter of the second agent model or a start moment of the update.

Optionally, the first device is an air conditioner, and the first state includes at least one of the following: an outdoor temperature, an indoor temperature, indoor humidity, energy consumption of the air conditioner, an airflow of a fan of the air conditioner, a setting temperature of a direct evaporative cooler of the air conditioner, a setting temperature of an indirect evaporative cooler of the air conditioner, or a setting temperature of a cooling coil of the air conditioner; or the first device is an air conditioner, and the first control action includes at least one of the following: a rotational speed setting command signal of a compressor of the air conditioner, a temperature setting command signal of a direct evaporative cooler of the air conditioner, a temperature setting command signal of an indirect evaporative cooler of the air conditioner, a temperature setting command signal of a cooling coil of the air conditioner, an indoor-fan airflow setting command signal of the air conditioner, or an outdoor-fan airflow setting signal of the air conditioner.

The term "unit" herein may be implemented in a form of software and/or hardware. This is not specifically limited.

For example, the "unit" may be a software program, a hardware circuit, or a combination thereof that implements the foregoing functions. Whether the functions are performed by hardware or software depends on particular applications and design constraints of the technical solutions. A person skilled in the art may use different methods to implement the described functions for each particular application, but it should not be considered that the implementation goes beyond the scope of this application.

For example, in an implementation process, the transceiver unit 1101 and the processing unit 1102 may be completed by using instructions or program code in a form of software, for example, by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory, and implements the transceiver unit 1101 and the processing unit 1102 in combination with hardware of the processor.

It should be noted that when the apparatus provided in the foregoing embodiment performs the foregoing method, division into the foregoing functional modules is merely used as an example for description. During actual application, the foregoing functions may be allocated as required to different functional modules for implementation, that is, an internal structure of the apparatus is divided into different functional modules to implement all or some of the functions described above. For example, in the apparatus 1100, the transceiver unit 1101 may be configured to perform any step in the foregoing method, and the processing unit 1102 may be configured to perform any step in the foregoing method. Steps that the units are responsible for implementing may be specified as required, and all functions of the foregoing apparatus are implemented by the units by respectively implementing different steps in the foregoing method.

FIG. 6 is a diagram of a hardware structure of a control apparatus according to an embodiment of this application. The control apparatus 5000 (the apparatus 5000 may be specifically a computer device) shown in FIG. 6 includes a memory 5001, a processor 5002, a communication interface 5003, and a bus 5004. The memory 5001, the processor 5002, and the communication interface 5003 are communicatively connected to each other through the bus 5004.

The memory 5001 may be a read-only memory (read-only memory, ROM), a static storage device, a dynamic storage device, or a random access memory (random access memory, RAM). The memory 5001 may store a program. When the program stored in the memory 5001 is executed by the processor 5002, the processor 5002 is configured to perform steps of the method in embodiments of this application. For example, the processor 5002 may perform the foregoing method 400.

The processor 5002 may be a general-purpose central processing unit (central processing unit, CPU), a microprocessor, an application-specific integrated circuit (application-specific integrated circuit, ASIC), a graphics processing unit (graphics processing unit, GPU), or one or more integrated circuits, and is configured to execute a related program, to implement the method in the method embodiments of this application.

The processor 5002 may alternatively be an integrated circuit chip, and has a signal processing capability. In an implementation process, the steps in the method in this application may be completed through a hardware integrated logic circuit in the processor 5002, or by using instructions in a form of software.

The processor 5002 may alternatively be a general-purpose processor, a digital signal processor (digital signal processor, DSP), an application-specific integrated circuit (ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory 5001. The processor 5002 reads information in the memory 5001, and completes, in combination with hardware of the processor 5002, functions that need to be performed by units included in the apparatus shown in FIG. 5, or performs the method 400 in the method embodiments of this application.

The communication interface 5003 uses a transceiver apparatus, for example, but not limited to, a transceiver, to implement communication between the apparatus 5000 and another device or a communication network. For example, a set #1 may be obtained through the communication interface 5003. For another example, a set #2 may be sent through the communication interface 5003.

The bus 5004 may include a channel through which information is transmitted between parts (for example, the memory 5001, the processor 5002, and the communication interface 5003) of the apparatus 5000.

An embodiment of this application further provides a computer device. The computer device includes a processor. The processor is configured to be coupled to a memory, and read and execute instructions and/or program code in the memory, to perform the method in any one of the foregoing embodiments.

An embodiment of this application further provides a system on chip. The system on chip includes a logic circuit. The logic circuit is configured to be coupled to an input/output interface, and transmit data through the input/output interface, to perform the method in any one of the foregoing embodiments.

It should be noted that the processor in embodiments of this application may be an integrated circuit chip, and has a signal processing capability. In an implementation process, the steps in the foregoing method embodiments may be completed through a hardware integrated logic circuit in the processor, or by using instructions or program code in a form of software. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory. The processor reads information in the memory and completes the steps in the foregoing method in combination with hardware of the processor.

It may be understood that the memory in embodiments of this application may be a volatile memory or a non-volatile memory, or may include a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of an example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification includes but is not limited to these and any memory of another proper type.

This application further provides a computer program product. The computer program product includes: computer program code. When the computer program code is run on a computer, the computer is enabled to perform the method in any one of the foregoing embodiments.

This application further provides a computer-readable medium. The computer-readable medium stores program code. When the program code is run on a computer, the computer is enabled to perform the method in any one of the foregoing embodiments.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A device control method, comprising:

   receiving a first set from a cloud, wherein the first set comprises at least one of the following: a plurality of pieces of training data, a training parameter of a first reinforcement learning model, or a parameter of the first reinforcement learning model;
   updating, based on the first set, a second reinforcement learning model deployed in a first device to the first reinforcement learning model, wherein the first reinforcement learning model is used to adjust energy consumption of the first device;
   obtaining a first state of the first device; and
   processing the first state by using the first reinforcement learning model, to obtain a first control action, wherein the first control action is used to adjust an operating parameter of the first device.

2. The control method according to claim 1, wherein the method further comprises:
   sending a second set to the cloud, wherein the second set comprises at least one of the following: first interaction data, the training parameter of the first reinforcement learning model, or the parameter of the first reinforcement learning model, and the first interaction data comprises: the first state, the first control action, a first reward signal corresponding to the first control action, and a second state obtained after the first control action is performed.

3. The control method according to claim 1 or 2, wherein first training data in the plurality of pieces of training data comprises: a first sample state, a first sample control action in the first sample state, a first sample reward signal corresponding to the first sample control action, and a second sample state obtained after the first sample control action is performed.

4. The control method according to any one of claims 1 to 3, wherein before receiving the first set from the cloud, the method further comprises:
sending environment information of the first device to the cloud, wherein the environment information of the first device is used to determine the first set.

5. The control method according to claim 4, wherein the plurality of pieces of training data are determined based on similarities between environment features of source devices corresponding to the plurality of pieces of training data and an environment feature of the first device, the environment features of the source devices corresponding to the plurality of pieces of training data are obtained by performing feature extraction on environment information of the source devices corresponding to the plurality of pieces of training data, and the environment feature of the first device is obtained by performing feature extraction on the environment information of the first device.

6. The control method according to claim 5, wherein the plurality of pieces of training data are obtained by performing random sampling in a training data set based on a similarity between an environment feature of a source device corresponding to training data in the training data set of the cloud and the environment feature of the first device, and the environment feature of the source device corresponding to the training data in the training data set of the cloud is obtained by performing feature extraction on environment information of the source device corresponding to the training data in the training data set of the cloud.

7. The control method according to any one of claims 1 to 6, wherein the parameter of the first reinforcement learning model comprises at least one of the following: a parameter of a first agent model in the first reinforcement learning model or a parameter of a first reward function in the first reinforcement learning model.

8. The control method according to any one of claims 1 to 7, wherein determining the first reinforcement learning model based on the set comprises:

when the first device is in a first scenario, updating a weight parameter of a second agent model in the second reinforcement learning model in a first update mode based on the set, to obtain the first agent model in the first reinforcement learning model; or
when the first device is in a second scenario, updating the weight parameter of the second agent model in the second reinforcement learning model in a second update mode based on the set, to obtain the first agent model in the first reinforcement learning model, wherein
the first scenario is different from the second scenario, and a difference between the first update mode and the second update mode comprises at least one of the following: a quantity of update times of the weight parameter of the second agent model or a start moment of the update.

9. The control method according to any one of claims 1 to 8, wherein the first device is an air conditioner, and the first state comprises at least one of the following: an outdoor temperature, an indoor temperature, indoor humidity, energy consumption of the air conditioner, an airflow of a fan of the air conditioner, a setting temperature of a direct evaporative cooler of the air conditioner, a setting temperature of an indirect evaporative cooler of the air conditioner, or a setting temperature of a cooling coil of the air conditioner; or
the first device is an air conditioner, and the first control action comprises at least one of the following: a rotational speed setting command signal of a compressor of the air conditioner, a temperature setting command signal of a direct evaporative cooler of the air conditioner, a temperature setting command signal of an indirect evaporative cooler of the air conditioner, a temperature setting command signal of a cooling coil of the air conditioner, an indoor-fan airflow setting command signal of the air conditioner, or an outdoor-fan airflow setting signal of the air conditioner.

10. A device control apparatus, comprising:

a transceiver unit, configured to receive a first set from a cloud, wherein the first set comprises at least one of the following: a plurality of pieces of training data, a training parameter of a first reinforcement learning model, or a parameter of the first reinforcement learning model; and
a processing unit, configured to:

update, based on the first set, a second reinforcement learning model deployed in a first device to the first reinforcement learning model, wherein the first reinforcement learning model is used to adjust energy consumption of the first device;
obtain a first state of the first device; and

process the first state by using the first reinforcement learning model, to obtain a first control action, wherein the first control action is used to adjust an operating parameter of the first device.

11. The control apparatus according to claim 10, wherein the transceiver unit is further configured to:
send a second set to the cloud, wherein the second set comprises at least one of the following: first interaction data, the training parameter of the first reinforcement learning model, or the parameter of the first reinforcement learning model, and the first interaction data comprises: the first state, the first control action, a first reward signal corresponding to the first control action, and a second state obtained after the first control action is performed.

12. The control apparatus according to claim 10 or 11, wherein first training data in the plurality of pieces of training data comprises: a first sample state, a first sample control action in the first sample state, a first sample reward signal corresponding to the first sample control action, and a second sample state obtained after the first sample control action is performed.

13. The control apparatus according to any one of claims 10 to 12, wherein before receiving the first set from the cloud, the transceiver unit is further configured to:
send environment information of the first device to the cloud, wherein the environment information of the first device is used to determine the first set.

14. The control apparatus according to claim 13, wherein the plurality of pieces of training data are determined based on similarities between environment features of source devices corresponding to the plurality of pieces of training data and an environment feature of the first device, the environment features of the source devices corresponding to the plurality of pieces of training data are obtained by performing feature extraction on environment information of the source devices corresponding to the plurality of pieces of training data, and the environment feature of the first device is obtained by performing feature extraction on the environment information of the first device.

15. The control apparatus according to claim 14, wherein the plurality of pieces of training data are obtained by performing random sampling in a training data set based on a similarity between an environment feature of a source device corresponding to training data in the training data set of the cloud and the environment feature of the first device, and the environment feature of the source device corresponding to the training data in the training data set of the cloud is obtained by performing feature extraction on environment information of the source device corresponding to the training data in the training data set of the cloud.

16. The control apparatus according to any one of claims 10 to 15, wherein the parameter of the first reinforcement learning model comprises at least one of the following: a parameter of a first agent model in the first reinforcement learning model or a parameter of a first reward function in the first reinforcement learning model.

17. The control apparatus according to any one of claims 10 to 16, wherein the processing unit is specifically configured to:

when the first device is in a first scenario, update a weight parameter of a second agent model in the second reinforcement learning model in a first update mode based on the set, to obtain the first agent model in the first reinforcement learning model; or
when the first device is in a second scenario, update the weight parameter of the second agent model in the second reinforcement learning model in a second update mode based on the set, to obtain the first agent model in the first reinforcement learning model, wherein
the first scenario is different from the second scenario, and a difference between the first update mode and the second update mode comprises at least one of the following: a quantity of update times of the weight parameter of the second agent model or a start moment of the update.

18. The control apparatus according to any one of claims 10 to 17, wherein the first device is an air conditioner, and the first state comprises at least one of the following: an outdoor temperature, an indoor temperature, indoor humidity, energy consumption of the air conditioner, an airflow of a fan of the air conditioner, a setting temperature of a direct evaporative cooler of the air conditioner, a setting temperature of an indirect evaporative cooler of the air conditioner, or a setting temperature of a cooling coil of the air conditioner; or
the first device is an air conditioner, and the first control action comprises at least one of the following: a rotational speed setting command signal of a compressor of the air conditioner, a temperature setting command signal of a direct evaporative cooler of the air conditioner, a temperature setting command signal of an indirect evaporative cooler of the air conditioner, a temperature setting command signal of a cooling coil of the air conditioner, an indoor-fan airflow setting command signal of the air conditioner, or an outdoor-fan airflow setting signal of the air conditioner.

19. A device control apparatus, comprising a processor and a memory, wherein the processor is configured to execute instructions stored in the memory, so that the control apparatus performs the method according to any one of claims 1 to 9.

20. A computer-readable storage medium, comprising computer program instructions, wherein when the computer program instructions are executed on a computer, the computer is enabled to perform the method according to any one of claims 1 to 9.

21. A computer program product comprising instructions, wherein when the instructions are run on a computer, the computer is enabled to perform the method according to any one of claims 1 to 9.

Cloud node 110

...

Communication
network

Local device
101

Local device
102

FIG. 1

FIG. 2

200

Control apparatus 210

Terminal device #A

Observation module 211

Reward signal calculation module 213

Decision module 212

Policy update module 214

Observation signal

Control signal

State

Control signal

State

Reward signal

Weight parameter of a model

FIG. 3

<u>400</u>

```
┌─────────────────────────────────────────────────────────────┐
│   A control apparatus #1 receives a set #1 from a cloud      │───410
└─────────────────────────────────────────────────────────────┘
                              │
┌─────────────────────────────────────────────────────────────┐
│  The control apparatus #1 determines a reinforcement learning │
│  model #1 based on the set #1, where the reinforcement learning│───420
│  model #1 is used to adjust energy consumption of a device #1 │
└─────────────────────────────────────────────────────────────┘
                              │
┌─────────────────────────────────────────────────────────────┐
│   The control apparatus #1 obtains a state #1 of the device #1 │───430
└─────────────────────────────────────────────────────────────┘
                              │
┌─────────────────────────────────────────────────────────────┐
│   The control apparatus #1 processes the state #1 by using the │
│  reinforcement learning model #1, to obtain a control action #1,│───440
│   where the control action #1 is used to adjust an operating    │
│             parameter of the device #1                         │
└─────────────────────────────────────────────────────────────┘
```

FIG. 4

```
┌───────────────────────────────────────────────────┐
│              Control apparatus 1100                │
│                                                   │
│   ┌──────────────────┐   ┌──────────────────┐     │
│   │ Transceiver unit │───│ Processing unit  │     │
│   │      1101        │   │      1102        │     │
│   └──────────────────┘   └──────────────────┘     │
│                                                   │
└───────────────────────────────────────────────────┘
```

FIG. 5

FIG. 6

## INTERNATIONAL SEARCH REPORT

| International application No. |
| --- |
| **PCT/CN2024/102465** |

### A. CLASSIFICATION OF SUBJECT MATTER

G05B13/04(2006.01)i

According to International Patent Classification (IPC) or to both national classification and IPC

### B. FIELDS SEARCHED

Minimum documentation searched (classification system followed by classification symbols)

IPC: G05B,F24F

Documentation searched other than minimum documentation to the extent that such documents are included in the fields searched

Electronic data base consulted during the international search (name of data base and, where practicable, search terms used)

CNABS, CNTXT, CNKI, VEN, ENTXTC, CJFD: 云端, 强化学习模型, 参数, 训练, 更新, 状态, 能耗, 控制, cloud, reinforcement learning model, parameter, train, update, state, energy consumption, control.

### C. DOCUMENTS CONSIDERED TO BE RELEVANT

| Category* | Citation of document, with indication, where appropriate, of the relevant passages | Relevant to claim No. |
| --- | --- | --- |
| PX | CN 116859738 A (HUAWEI TECHNOLOGIES CO., LTD.) 10 October 2023 (2023-10-10) entire description | 1-21 |
| X | CN 115717758 A (BEIJING UNIVERSITY OF POSTS AND TELECOMMUNICATIONS et al.) 28 February 2023 (2023-02-28) description, paragraphs 0081-0224 | 1-21 |
| A | CN 115950080 A (CHONGQING TERMINUS INTELLIGENT TECHNOLOGY CO., LTD.) 11 April 2023 (2023-04-11) entire description | 1-21 |
| A | WO 2022160705 A1 (CHINA ELECTRIC POWER RESEARCH INSTITUTE CO., LTD. et al.) 04 August 2022 (2022-08-04) entire description | 1-21 |
| A | WO 2023123838 A1 (SHANGHAI SENSETIME INTELLIGENT TECHNOLOGY CO., LTD.) 06 July 2023 (2023-07-06) entire description | 1-21 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **09 October 2024** | **09 October 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/102465**

| Patent document cited in search report | | | Publication date (day/month/year) | Patent family member(s) | Publication date (day/month/year) |
|---|---|---|---|---|---|
| CN | 116859738 | A | 10 October 2023 | None | |
| CN | 115717758 | A | 28 February 2023 | None | |
| CN | 115950080 | A | 11 April 2023 | None | |
| WO | 2022160705 | A1 | 04 August 2022 | None | |
| WO | 2023123838 | A1 | 06 July 2023 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310863147